# EUROPEAN PATENT SPECIFICATION

(11) **EP 2 029 265 B1**
(45) Date of publication and mention of the grant of the patent: **14.08.2013**
(21) Application number: 07795740.5
(22) Date of filing: 05.06.2007
(51) Int. Cl.: B29B 7/36, B29B 7/42, B29B 7/90

(54) **Ultrasound assisted continuous process and apparatus for dispersion of nanofibers and nanotubes in polymers**
Ultraschallunterstütztes kontinuierliches Verfahren und Vorrichtung zur Dispersion von Nanofasern und Nanoröhrchen in Polymeren
Procédé et appareil en continu assisté par ultrasons pour la dispersion de nanofibres et de nanotubes dans des polymères

(30) Priority: 05.06.2006 US 810900 P; 26.04.2007 US 926313 P
(43) Date of publication of application: 04.03.2009
(73) Proprietor: The University of Akron, Akron, Ohio 44325 (US)
(72) Inventor: ISAYEV, Avraam, Akron, Ohio 44333 (US)
(74) Representative: von Kreisler Selting Werner
(86) International application number: PCT/US2007/013196
(87) International publication number: WO 2007/145918

(56) References cited:
- EP-A1- 1 645 381
- US-A1- 2003 089 890
- US-A1- 2003 124 211
- US-A1- 2005 070 657
- US-A1- 2006 041 104
- HIGGINS: 'CARBON NANOFIBER-POLYMER COMPOSITIES FOR ELECTRONIC APPLICATIONS', [Online] 27 October 2007, XP008104105 Retrieved from the Internet: <URL:http://www.ohiolink.edu/etd/send-pdf.c gi/Higgins%20Bernadette%20Ann.pdf/acc_num=a kron1143655787>

## Description

### RELATED APPLICATION DATA

This application claims priority to previously filed United States Provisional Patent Application Nos. 60/810,900, filed on June 5, 2006, entitled "Continuous Ultrasonic Process for Dispersion of Nanofibers and Nanotubes in Polymer Melts and Manufacture of Products from Prepared Nanocomposities;" and 60/926,313, filed on April 26, 2007, entitled "Ultrasound Assisted Process for Dispersion of Carbon Nanofibers in Polymers Using Single Screw Extrusion and Continuous Dispersion Using Twin Screw Extrusion."

### FIELD OF THE INVENTION

The present invention relates to a process for producing high performance polymer composites. Such polymer composites being made from a combination of polymer and nanofibers and/or nanotubes where standard mixing methods limit the level of dispersion attainable. The ultrasonic treating method of the present invention allows a more highly dispersed polymer composite mixture which provides increased thermal, mechanical and electrical properties.

### BACKGROUND OF THE INVENTION

High performance polymer nanocomposites are greatly influenced by the degree of dispersion of nanofibers and nanotubes. In nanocomposites, chemically dissimilar components are combined at the nanometer scale since they are too small to act as stress concentrators. Therefore, stronger interaction between the polymer and the nanofibers or nanotubes produces composites with significant enhancement of properties like strength, modulus, electrical conductivity, permeability, thermal resistance, and heat distortion temperature. In contrast to conventional composites, these effects take place at very low filler loadings (1 to 5 weight percent) leading to a significant weight reduction of products made from nanocomposites in comparison with currently used metal alloys and high performance fiber-reinforced composites. However, all of these desirable effects can be only achieved if the desired nanocomponents are well dispersed in one or more polymeric matrices. Currently, ultrasonic irradiation for a prolonged period is used to accomplish this goal. Given this, current processes are time consuming and effective only in matrices of low viscosity. Thus, there is a need in the art for improved processes that are able to produce nanocomposites in a more economical and time efficient manner.

Polymer nanocomposites containing CNFs often exhibit properties superior to conventional fiber-reinforced composites. Among them, CNF/polyimide nanocomposites were studied. The CNF's are produced by the catalytic decomposition of hydrocarbons in the vapor phase at 500-1500°C. CNFs are readily aggregate and bundle together or become entangled. Dispersion of the individual fibers being the main obstacle for their use in many applications. The commonly used methods to disperse CNFs are mechanical, melt processing and plasma treatment. Among these methods ultrasonication of CNFs in solutions for a prolonged time (minutes and hours) is used. This is a batch process and the prolonged ultrasonication introduces defects resulting in shorter CNFs which is responsible for many of their attractive properties. Melt processing of the high viscosity polymer/CNF mixtures is utilized through high shear mixing in the extruder and internal mixer. These methods have environmental advantages as they are solvent free processes. Plasma coating is used to enhance the dispersion of the CNFs in the polymer matrix. In-situ polymerization is also utilized to keep bundles of CNFs dispersed in the polymer matrix. Other methods have been attempted for enhancing dispersion, like in-situ production of CNFs, but have found limited success.

Recently, the use of high power ultrasound in extrusion process was proposed for dispersion of nanosize silica fillers and intercalation and exfoliation of nanoclays in polymers with a residence time of ultrasonic treatment of only a few seconds.

The present invention describes preparation of CNF/PEI nanocomposites obtained by means of extrusion in a novel ultrasonic compounding extruder. Mechanical, rheological, electrical, and thermal properties of the obtained nanocomposites are noted. Effects of the processing parameters on dispersion of CNFs in PEI are also noted.

Fiber-reinforced composites have been widely used in the area of aerospace and military due to their light weight and improved mechanical properties. Currently, graphite fiber composites dominate the aerospace industry. There are some problems associated with the conventional fiber reinforced composites such as the accumulation of electrostatic charge on their surface which can cause the local heating resulting in the catastrophic failure of the surrounding materials. In recent years, the polymer/carbon nanotube composites have gained tremendous attention both in academia and industry. While the first image of tubes resembling nanotube was published in 1976, major advances in the area occurred after the formation of CNTs was published by lijima in 1991. Because of the exceptional mechanical, thermal and electrical properties along with their light weight, carbon nanotubes have the potential to surpass graphite fiber composites and overcome the problem associated with the conventional fiber-reinforced composites. Due to the high aspect ratio (100-1000) of CNTs, it is possible to achieve the percolation threshold at very low loading of CNTs. The biggest challenge in effective use of CNTs is their lack of dispersion in a polymer matrix. During synthesis of CNTs, nanotubes easily aggregate or form bundles due to strong intertube van der Waals attraction and hence limit the effective use of their exceptional properties obtained at the individual nanotube level. Many researchers have tried different routes to disperse CNTs, however, successful dispersion still remains a challenge as can be seen from the various review papers on dispersion of CNTs in a polymer matrix. Current commonly used methods for dispersion of nanotubes in polymer matrix are: in-situ polymerization, mechanical and chemical treatment. Among these methods in-situ polymerization and chemical modification may not be commercially viable due to their limitation in scale up and their negative environmental impact. Prolonged sonication of the CNTs in an ultrasonic bath using solvent is one of the most commonly used methods to disperse nanotubes, however, it introduces defects in CNTs and results in reduced aspect ratio which is basis for many of their attractive properties. Melt processing, being more efficient, rapid and environmentally friendly method to disperse CNTs in a polymer matrix, is one of the most preferred techniques from industrial application point of view because of its easiness in scale up. However, a limited number of studies have been done on melt processing/extrusion of polymer/carbon nanotube composites.

Over the past decade, extensive work has been performed to develop a novel extrusion process with the aid of high power ultrasound. It was shown that ultrasonic oscillations can breakdown the 3-D network in vulcanized rubber within seconds. Ultrasound was found to improve the compatibilization of immiscible plastic blends, plastics/rubber and rubber/rubber blends during extrusion process. In recent years, use of ultrasound to disperse nanofiller in a polymer matrix is gaining attention. Ultrasound helps in rapid exfoliation and intercalation of nano-clay in a polymer matrix.

There is a need in the art to improve the dispersion of carbon nanotubes in polyimide matrix with the help of ultrasound assisted extrusion process.

This invention discloses a novel method for the continuous dispersion of carbon nanotubes in a polymer matrix. Ultrasound assisted twin screw extrusion of polyetherimide (PEI)/MWNT is disclosed. PEI was chosen because of its extensive use in composites for aerospace applications due to its desirable combination of mechanical and thermal properties. PEI possesses outstanding dimensional and thermo-oxidative stability with desired processability required for space applications. The effects of ultrasound on die pressure, electrical conductivity, rheological, morphological and mechanical properties are utilized. Document EP-A-1 645 381 disclose a method in accordance with the preamble of claim 1 and an apparatus in accordance with the preamble of claim 12.

### SUMMARY OF THE INVENTION

The present invention relates to a method according to claim 1 and to an apparatus according to claim 12.

### BRIEF DESCRIPTION OF THE DRAWINGS

Figure 1 are HR SEM micrographs of polyimide containing 2 weight percent of MWCNT's obtained at a flow rate of 0.063 g/sec, an amplitude of 2.5 µm (A) and 7.5 µm (B);
Figure 2 shows SEM micrographs of CNF/PEI mixture containing 3 weight percent CNF's obtained from ultrasonic extruder without (A) and with (B) imposition of ultrasound at a flow rate of 0.25 g/sec and an amplitude of 15 µm;
Figure 3 is an illustration of the ultrasonic extruder;
Figure 4 is a graph providing the entrance pressure in front of ultrasonic treatment zone and melt temperature in the ultrasonic treatment zone as a function of amplitude at various CNF concentrations at 60 rpm;
Figure 5 is a graph detailing ultrasonic power consumption as function of ultrasonic amplitude for PEI nanocomposites at various CNF concentrations at 60 rpm;
Figure 6 is a graph showing complex viscosity as a function of frequency for untreated and ultrasonically treated CNF/PEI nanocomposites containing 0 to 20 wt% CNFs obtained at various ultrasonic amplitudes at 60 rpm;
Figure 7 is a graph providing complex viscosity at a frequency of 0.2 s⁻¹ as a function of CNF concentration for untreated and ultrasonically treated composites obtained at various ultrasonic amplitudes at 60 rpm;
Figure 8 is a graph detailing volume resistivity of nanocomposites as a function of CNF concentration obtained at various ultrasonic amplitudes at 60 rpm and after ball milling;
Figure 9 is graph of thermal conductivity of PEI/CNF nanocomposites as a function of CNF concentration obtained at different ultrasonic amplitudes at 60 rpm;
Figure 10 is a SEM micrograph of CNFs as received;
Figure 11 is a SEM micrograph of cryofractured surface of nanocomposite containing 3 wt% CNFs prepared by ball milling and injection molding;
Figure 12 are SEM micrographs of cryofractured surface of injection molding of 15 wt% CNF/PEI nanocomposites obtained without (a) and with (b) ultrasonic treatment at an amplitude of 10 µm at 60 rpm;
Figure 13 is a SEM micrograph of CNFs extracted from untreated 11 wt% CNF/PEI nanocomposites at 60 rpm;
Figure 14 is a graph detailing the effect of ultrasound on length distribution of CNFs for 15 wt% CNF/PEI nanocomposites at 60 rpm;
Figure 15 is a graph showing Young's modulus of CNF/PEI nanocomposites as a function of CNF concentration without and with ultrasonic treatment at various ultrasonic amplitudes at 60 rpm and after ball milling;
Figure 16 is a graph detailing strength vs. CNF concentration of CNF/PEI nanocomposites obtained without and with ultrasonic treatment at different amplitudes at 60 rpm and after ball milling;
Figure 17 is an illustration of an ultrasonic twin screw micro-compounder;
Figure 18 is a graph comparing die pressure (open symbols) and power consumption (filled symbols) versus amplitude for different MWNT loadings;
Figure 19 is a graph detailing complex viscosity as a function of frequency at different ultrasonic amplitudes and MWNT loadings;
Figure 20 is a graph comparing storage modulus versus frequency for treated and untreated nanocomposites at different MWNT loadings;
Figure 21 is a graph relating G' versus G" for treated and untreated nanocomposite at various MWNT loadings;
Figure 22 is a graph of Tanδ as a function of frequency for treated and untreated nanocomposites at different MWNT loadings;
Figure 23 is a graph of the effect of MWNT loading on volume resistivity of nanocomposites at various ultrasonic amplitudes;
Figure 24 is a graph of Young's modulus versus MWNT loadings at different ultrasonic amplitudes;
Figure 25 is a graph of the effect of ultrasonic amplitude and MWNT loading on tensile strength of nanocomposites; and
Figure 26 details HRSEM micrographs of cryofractured surfaces of 2 wt% MWNT nanocomposites (a) untreated, (b) treated at an amplitude of 6.0µm.

### DETAILED DESCRIPTION OF THE INVENTION

The present disclosure relates to processes for producing high performance polymer composites. In one aspect, the present disclosure relates to a process for producing high performance polymer composites that comprise at least one high temperature thermoplastic resin and/or at least one high temperature thermoset resin that are combined with one or more types of fibers and/or nanofibers (e.g., polymer fibers, polymer nanofibers, carbon fibers, carbon nanofibers, ceramic fibers, ceramic nanofibers, etc.). In another aspect, the present disclosure relates to a process for producing high performance polymer composites that comprise at least one high temperature thermoplastic resin and/or at least one high temperature thermoset resin that are combined with carbon fibers, carbon nanofibers and/or carbon nanotubes. In still another aspect, the present disclosure relates to a method for the continuous dispersion of carbon nanofibers (CNFs) in a polymer matrix for manufacturing high performance nanocomposites developed using an ultrasonically assisted single screw extrusion process where a reduction in die pressure, percolation threshold and an increase in viscosity, Young's modulus and electrical conductivity along with improved CNF dispersion in nanocomposites is achieved via ultrasonic treatment. In still another aspect, the present disclosure relates to a method for the continuous dispersion of carbon nanotubes in a polymer matrix for manufacturing high performance nanocomposites developed using an ultrasonically assisted twin screw extrusion process where ultrasonic treatment causes a reduction in die pressure with a permanent increase of viscosity of treated samples along with improved mechanical, electrical and thermal properties.

In still another aspect the present disclosure discloses a method for producing polymer composites having improved thermal, electrical and/or mechanical properties comprising: providing one or more polymers, providing a filler wherein the filler is one or more nanofibers or one or more nanotubes, providing a continuous mixer for mixing the one or more polymers and the filler, providing an ultrasonic treatment means having an ultrasonic treatment zone with a frequency in the range from about 15kHz to about 1000kHz, mixing, in the continuous mixer, the one or more polymers and the filler to create a polymer filler mixture, feeding the polymer filler mixture to the ultrasonic treatment zone wherein the polymer filler mixture is subject to ultrasonic treatment for less than 60 seconds to thereby further disperse the filler and produce a polymer composite having improved thermal, electrical and/or mechanical properties, and recovering the ultrasonically treated polymer filler mixture as a polymer mixture product.

In yet another aspect the present disclosure discloses a polymer composite made by the method for producing polymer composites having improved thermal, electrical and/or mechanical properties comprising providing one or more polymers, providing a filler wherein the filler is one or more nanofibers or one or more nanotubes, providing an ultrasonic treatment means with a frequency in the range from about 15kHz to about 1000kHz, mixing in a continuous mixer the one or more polymers and the filler to create a polymer filler mixture, feeding the polymer filler mixture to an ultrasonic treatment zone wherein the polymer filler mixture is subject to the ultrasonic treatment means for less than 60 seconds, and recovering the ultrasonically treated polymer filler mixture as a polymer mixture product.

In another aspect the present disclosure discloses an apparatus for mixing polymer and filler comprising an ultrasonic treatment zone operating in a frequency from 15kHz to about 1000 kHz, an extruder wherein one or more streamlined channels deliver a premixed mixture to the ultrasonic treatment zone, an exit means wherein the ultrasonically treated mixture exits the ultrasonic treatment zone into one or more streamlined exit channels.

The invention is not limited to any particular embodiment of combining polymer and fiber, and may vary based on the starting materials used.

As used herein nanofibers are fibers having an average diameter in the range of about 1 nanometer to about 25,000 nanometers (25 microns). In another embodiment, the nanofibers of the present invention are fibers having an average diameter in the range of about 1 nanometer to about 10,000 nanometers, or about 1 nanometer to about 5,000 nanometers, or about 1 nanometers to about 3,000 nanometers, or about 1 nanometers to about 1,000 nanometers, or even about 1 nanometers to about 200 nanometers. In another embodiment, the nanofibers of the present invention are fibers having an average diameter of less than 25,000 nanometers, or less than 10,000 nanometers, or even less than 5,000 nanometers. In still another embodiment, the nanofibers of the present invention are fibers having an average diameter of less than 3,000 nanometers, or less than about 1,000 nanometers, or even less than about 500 nanometers. The nanofibers of the present invention may vary in length but in one embodiment have a length from 1 nanometers to about 10,000 meters or in another embodiment from 1 nanometer to about 1000 meters, or in another embodiment from about 1 nanometer to about 1 meter. Additionally, it should be noted that here, as well as elsewhere in the text, ranges may be combined.

Various methods/techniques can be used to produce fibers, more particularly nanofibers, in accordance with the present invention. Melt-blowing, Nanofibers by Gas Jet (NGJ) process, and electrospinning are included among these techniques. In a melt-blowing process, a stream of molten polymer or other fiber-forming material is typically extruded into a jet of gas to form fibers. Alternatively, nanofibers in accordance with the present invention can be formed by other techniques, as known in the art. Such techniques include, but are not limited to, phase separation, casting in pores, and slitting of a film. These techniques are discussed in PCT Publication No. WO 03/086234.

Carbon nanotubes, and method for making such carbon nanotubes, are known to those of skill in the art. Accordingly, the present invention is not limited to any one method by which to produce carbon nanotubes. Rather, any suitable method can be used to produce carbon nanotubes for use in conjunction with the present invention. Additionally, any size of carbon nanotube can be used. In one embodiment, carbon nanotubes suitable for use in conjunction with the present invention have average diameters in the range of about 1 nanometer to about 25,000 nanometers (25 microns). In another embodiment, carbon nanotubes suitable for use in conjunction with the present invention have average diameters in the range of about 1 nanometer to about 10,000 nanometers, or about 1 nanometer to about 5,000 nanometers, or about 3 nanometers to about 3,000 nanometers, or about 7 nanometers to about 1,000 nanometers, or even about 15 nanometers to about 200 nanometers. In another embodiment, carbon nanotubes suitable for use in conjunction with the present invention have average diameters of less than 25,000 nanometers, or less than 10,000 nanometers, or even less than 5,000 nanometers. In still another embodiment, carbon nanotubes suitable for use in conjunction with the present invention have average diameters of less than 3,000 nanometers, or less than about 1,000 nanometers, or even less than about 500 nanometers.

The length of the carbon nanotubes suitable for use in conjunction with the present invention is not critical and any length carbon nanotube can be used. In one embodiment, carbon nanotubes suitable for use in conjunction with the present invention have lengths in the range of about 1 nanometer to about 25,000 nanometers (25 microns), or from about 1 nanometer to about 10,000 nanometers, or about 1 nanometer to about 5,000 nanometers, or about 3 nanometers to about 3,000 nanometers, or about 7 nanometers to about 1,000 nanometers, or even about 10 nanometers to about 500 nanometers. In another embodiment, the carbon nanotubes suitable for use in conjunction with the present invention have length of at least about 5 nanometers, at least about 10 nanometers, at least about 25 nanometers, at least about 50 nanometers, at least about 100 nanometers, at least about 250 nanometers, at least about 1,000 nanometers, at least about 2,500 nanometers, at least about 5,000 nanometers, at least about 7,500 nanometers, at least about 10,000 nanometers, or even at least about 25,000 nanometers. In still another embodiment, carbon nanotubes suitable for use in conjunction with the present invention have lengths that would not be considered to be nano-scale lengths. That is, in some embodiments of the present invention, any length carbon nanotube can utilized.

In one embodiment, composites in accordance with the present invention can be prepared by a continuous process using high power ultrasound to prepare light weight polymer nanocomposites containing well dispersed nanofibers and nanotubes. The improved composites will exhibit improved rheological, mechanical and electrical properties. While not being bound to a specific theory, the process leads to a breakup of the existing bundles in nanofibers or nanotubes. The samples are evaluated using X-ray diffraction technique, HRSEM, TEM and AFM microscopy.

Polymers containing carbon nanotubes (CNT's) and carbon nanofibers (CNF's) are materials that have a wide variety of potential applications. The unique structure and properties of CNT's and CNF's position them for electronic structures, electro-statically dissipative materials, polymer nanocomposites and biological systems. As a result of the manufacturing process CNT's and CNF's are easily aggregated and bundle together or become entangled due to strong intertube and interfiber attractions which act as the main obstacle for their use in most applications. Currently, the biggest challenge for the effective use of CNT's and CNF's is their lack of dispersion into polymer matrices. Many researchers have tried to disperse CNT's and CNF's via different routes, but found limited success.

The commonly used methods to disperse CNT's and CNF's are mechanical, melt processing, chemical and plasma treatment. Among these methods ultrasonication of CNT's and CNF's in a solution for a prolonged time (minutes and hours) is one of the most commonly used methods for their dispersion. This is a batch process typically carried out in an ultrasonic bath. The prolonged ultrasonication introduces defects in CNT's and CNF's shortening them and hence resulting in reduced aspect ratio which is responsible for many of their attractive properties. Also, melt processing of the high viscosity polymer/CNT or polymer/CNF mixtures is utilized using high shear mixing in an extruder or internal mixer. These methods have the advantage of being free of solvents. Plasma treatment is also used to enhance the dispersion of the CNT's and CNF's in the polymer matrix.

As grown CNT's and CNF's contain some residual catalyst, amorphous carbon, fullerenes and some other impurities and it becomes necessary to purify them prior to functionalization. A very common way to purify the CNT's and CNF's is the combination of acidic treatment and thermal oxidation or decomposition.

There are two main approaches for surface modifications of CNF's and CNT's for processability and property enhancement: a covalent attachment of functional groups and a non-covalent attachment of molecules to the walls of the CNF's and CNT's. Functional groups covalently attached to their surface can improve the efficiency of load transfer but these functional groups might also introduce structural defects on their walls. For applications requiring high conductivity the covalent functionalization is not an attractive method, whereas the non-covalent attachment is attractive for electrical applications, since it does not alter the structure. However, the drawback of non-covalent attachment is the low load transfer efficiency of CNT's and CNF's because of the weak forces between them and the wrapping polymer molecules. Appropriate chemical oxidation of CNT and CNF surfaces with the aid of prolonged ultrasonication in a mixture of concentrated H₂SO₄ and HNO₃ can introduce oxygen-containing functional groups on the open ends that are formed in the oxidizing environment. Fluorination is another commonly used method for the functionalization of CNT's surfaces. CNT's are reacted with F₂ gas allowing some of the fluorine substituents to be exchanged by nucleophilic substitution leading to the surface functionalization. These fluorinated CNT's retain most of their thermal conductivity and mechanical properties, since no carbon atoms are displaced. Different surfactants (both ionic and non-ionic) have been proposed to improve the wetting action and dispersion stability of CNT's. Sodium dodecyl sulfate (SDS), an ionic surfactant, is generally used with hydrosoluble polymers. Alternatively, non-ionic surfactants have been proposed in the case where organic solvents are used (*e.g.,* in the case of epoxy resins). Oxygen plasma treatment was also proposed as a suitable method to change the CNF's surface from hydrophobic to hydrophilic by introducing oxygen onto the CNF's surface. In-situ polymerization is another method used to keep bundles of CNT's and CNF's dispersed in the polymer matrix and also improves the processability, magnetic and optical properties by attaching conjugated or conducting polymer to their surfaces by in-situ polymerization. This brief review, though non-exhaustive, clearly indicates the need to develop a more efficient method for the dispersion of CNTs and CNF's in high viscosity polymer matrices.

One possible route to disperse CNT's and CNF's in polymer melts involves the extrusion-mixing process using high power ultrasound leading to the breaking of bundles at very short residence times. The use of high-intensity ultrasound in processing is generally based on the application of nonlinear effects produced by finite amplitude pressure variations. The most important effects produced by ultrasound are: heat, cavitation, agitation, acoustic streaming, interface instabilities and friction, diffusion and mechanical rupture. Due to its powerful mechanical and chemical effects, ultrasound has been used in diverse areas including sonochemical polymerization, sonochemical modification of polymer surfaces, cleavage of polymer chains in solution, dispersion of fillers and other components in the formation of paints, the encapsulation of inorganic particles with polymers, and modification of particle size in polymer powders. However, these studies are carried out under static no flow conditions.

During the last decade novel methods have been developed for continuous processing of various thermoplastics, elastomers and foams with the aid of high power ultrasonic waves. Earlier work was carried out by the imposition of ultrasonic waves that introduced shear along the die surface. Such an ultrasonic treatment of thermoplastic melts during extrusion leads to some thixotropic and permanent changes in polymers. In particular, a reduction in the die pressure during flow due to a decrease of viscosity of polymer melts was observed. Also, the ultrasonic treatment led to improved processability of melts and improved performance characteristics of molded products. In the case of thermoplastic foams, ultrasonic treatment led to a break up of cell structure, which reduced cell size and narrowed their distribution resulting in foams with increased mechanical properties. However, due to imposition of the shear ultrasonic waves, they did not cause significant chemical and physical effects.

More significant effects are observed when the compression/expansion ultrasonic waves are imposed on polymers. By imposition of such waves it is possible to induce much stronger effects on polymers. In particular, a breakage of the crosslinks in thermoset materials is achieved allowing their recycling. Many different rubbers cured by various curing systems including sulfur, peroxide and resin containing recipes are de-crosslinked and re-crosslinked. Changes of curing behavior, mechanical properties and molecular characteristics are measured and possible mechanisms of processes taking place during ultrasonic devulcanization are elucidated. In addition, thermoset foams cured by peroxide are de-crosslinked.

In one embodiment ultrasonic treatment in the coaxial extrusion reactor for a very short residence time (in the order of seconds) leads to an enhancement of mixing and dispersion of nano-silica filler in polymers: Ultrasonically treated EPDM/silica mixtures, even without the silane treatment of silica, indicated significantly reduced sizes of silica agglomerates in comparison with those obtained by an internal mixer and a two-roll mill. Sizes of agglomerates in the treated mixtures are even lower than those in the EPDM/silica mixtures treated by the silane. In this particular embodiment the ultrasonic treatment is carried out at a barrel temperature of 100°C, a clearance of 3.0 mm, a flow rate of 0.63 g/sec, a frequency of 20 kHz and an amplitude of 10 µm. The average residence time in the treatment zone is 16.1 seconds.

Image analysis was performed and the size of the silica agglomerates was determined as a function of processing method. A considerable reduction occurs in the size of agglomerates upon the silane (SN) treatment of silica in the mixtures from an internal mixer. The mixture obtained from a two-roll mill revealed the agglomerate sizes of about 0.7 µm. At the same time, in the ultrasonically treated mixture even without treatment of the silica by the silane the agglomerate size was reduced to 0.3 µm, which was the lowest among all the mixtures.

High power ultrasound was also found to compatibilize plastic/rubber and rubber/rubber blends during the extrusion process. Ultrasonically treated plastic/rubber and rubber/rubber blends indicated *in-situ* copolymer formation and compatibilization in the melt state leading to a significant enhancement of the mechanical properties of the blends. One idea involves *In-situ* copolymer formation at the interfaces and their vicinities in the ultrasonically treated blends during extrusion. Data obtained by a solvent extraction indicating a reduction in the amount of the extractable component, GPC indicating the formation of a high molecular weight tail, AFM indicating smooth interfacial region and SEM indicating stabilization of the phase morphology in the melt state of the ultrasonically treated blends pointed towards the occurrence of an *in-situ* segmental copolymerization and compatibilization of immiscible polymer blends. In the untreated blend a sharp step ranging between 45 and 130 nm is present between the PP and NR phases. However, a smooth step ranging between 6 to 14 nm is observed in the treated blend revealing the presence of a tiny transition interface layer between plastic and rubber phases in the blend that contains a copolymer.

The previous mentioned phenomena introduced by ultrasound in polymers occur on the molecular and supermolecular level due to a competition between the continuous break up and reformation of chemical bonds and physical interactions. Thus, it is possible to develop a continuous ultrasonic process for the dispersion of CNT's and CNF's in polymer melts via the break up of physico-chemical bonds between the nanofibers and nanotubes in bundles.

The major challenge in the manufacturing of advanced nanocomposites containing CNT's and CNF's in high temperature and high performance polymer matrices is related to the fact that the existing technologies lack the ability to break up bundles of CNT's and CNF's during preparation of the compounds. Stresses developed during the compounding of thermoplastic resins with CNT's and CNF's in the existing mixing equipment are not sufficient to overcome these forces. The main issue is how to break up bundles of interconnected CNT's and CNF's in order for the resin to penetrate between them to create good dispersion and at the same time to retain the connectivity necessary for electrical conductivity. Only then the benefits of their conductivity, high strength and modulus can be fully realized. In order to overcome this issue, novel mixing techniques have to be developed including an extensive knowledge-base to understand the phenomena taking place during compounding.

Two embodiments are detailed with ultrasonic devices carrying out mixing and dispersion, each specifically designed to accommodate mixing CNT's and CNF's.

One setup consists of a micro-compounder (Prism), a 16 mm modular twin-screw extruder, with ultrasonic attachment where ultrasonic waves are imposed in the pressurized zone immediately after the mixing zone.

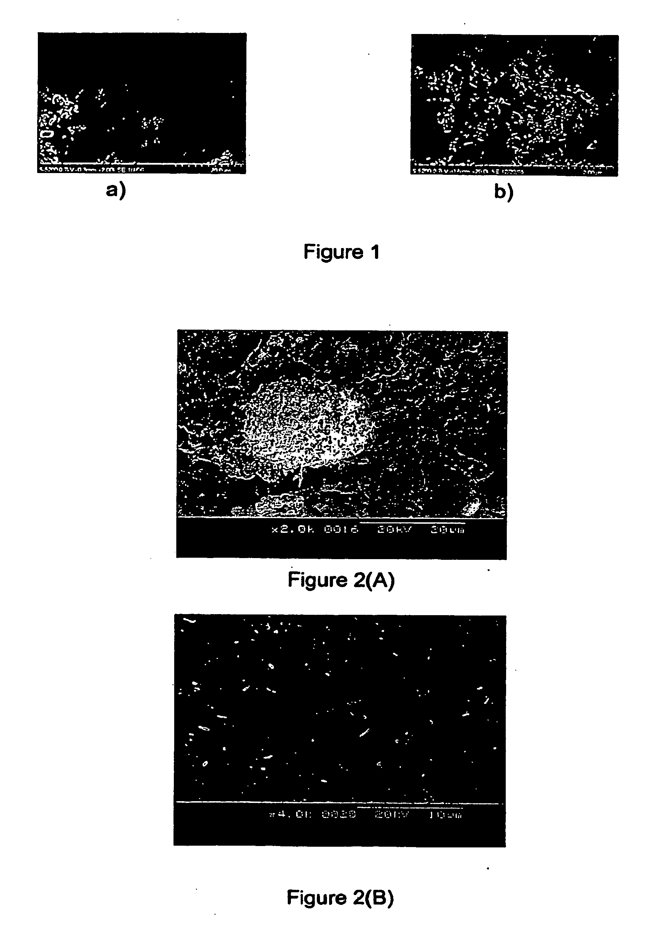

The setup allows the ability to process a small amount of the CNT/polymer mixture essential for the present day limited availability (grams in quantities) and related high cost (hundred dollars) of CNT's. Thus, the micro-compounder is a continuous mixer with the small sample requirements of a batch compounder. The micro-compounder offers precise control of mixing temperature and speed. In one embodiment, the compounds to be combined into the desired polymer composite are premixed by a twin-screw extruder via passage through an ultrasonic treatment zone contained therein. In this ultrasonic treatment zone the items to be combined into the desire composite are subjected to ultrasonic waves with a frequency of 40 kHz and an amplitude of up to 7.5 µm. The die is equipped with two ultrasonic horns inserted into the line of passage of the compound. In this way one will be able to subject a small amount of the CNT/polymer mixture to the action of ultrasound during flow at precisely controlled flow rates up to 0.2 g/sec. The ultrasonically treated and untreated compounds obtained using the ultrasonic micro-compounder are injection molded into tensile bars by a mini-jet injection molder. It should be noted that the operation temperature of ultrasonic micro-compounder and mini-jet molder is up to 400°C, allowing us to handle high temperature thermoplastics. Results obtained on the dispersion of the multi-wall carbon nanotubes (MWCNT's) in polyimide matrix are highly encouraging. In particular, Figures 1(A) and 1(B) show a comparison of HR SEM micrographs. The micrographs A and B are obtained at different magnifications (the scale of 20 and 2 µm are indicated in micrograph A and B. respectively). The micrograph A for the sample treated at an amplitude of 2.5 µm details the existence of bundles of CNT's. At this amplitude the energy is not sufficient to break up the bundles. On the other hand, the micrograph B for the sample treated at an amplitude of 7.5 µm shows individual MWCNT's having a diameter of 20 nm. That is bundles of CNT's were dispersed to the level of individual CNT's at a mean residence time in ultrasonic zone of 31.5 seconds.

For mixing of CNF's that are available in larger quantities, a 2,54 cm (one inch) ultrasonic single screw extruder, with the screw having three mixing sections, is developed and manufactured.

In this type of extruder CNF's that are available in large quantities can be used. In the ultrasonic extruder two ultrasonic horns oscillating at frequencies from 15 kHz to 1000 kHz and at amplitudes up to 20 µm are used. The ultrasonic treatment zone consists of two horns oriented perpendicular to the screw axis and placed in the extruder barrel extension after two mixing sections. After the ultrasonic treatment zone the screw optionally has an additional mixing section that was designed to prevent re-agglomeration of CNF's after their separation in the treatment zone. Design of the screw can be varied. A provision was also made to streamline flow into the gaps between the tip of the horns and the rotating screw shaft. These gaps are created by making streamlined channels on the barrel surface while maintaining the cylindrical shape of the screw shaft. This ultrasonic extruder operates at flow rates up to 2 g/sec, temperatures up to 400°C and therefore, is suitable for the processing of high temperature polymers. One embodiment discloses the compounding of CNF/polyetherimide (PEI) mixture. The dry blended CNF's and PEI powder is fed, melted and advanced by the screw into two mixing sections where compounding takes place. After compounding the melt is advanced into the ultrasonic zone through a gap between the screw surface and horns. Thus, the compounded material passes through the pressurized treatment zone where it is subjected to ultrasonic treatment and shearing by the rotational action of the screw. After such treatment, the CNF/polymer mixture is passed through another mixing section and extruded through a die and pelletized for further characterization and shaping. If the need arises, shaping can be done immediately at the exit from the extruder by installing a proper shaping die. By varying the flow rates, die dimensions and gap between the horns and the rotating screw surface, the pressure and residence time in the ultrasonic treatment zone can be varied. These are important variables determining the action of ultrasound. Also, other processing parameters such as temperature and ultrasonic amplitude can be varied.

The streamlined channels of the present invention allows for various configurations of flow around the extruder screw. Streamlining the channels allows for better control of processing characteristics and places the mixture/premix in the proper area prior to and during the ultrasonic treatment step. Once in the ultrasonic treatment step the channel depth is important to the overall treatment. The channel depth is designed to allow for complete treatment of the mixture. One concern involves depths designed too deep not allowing for full ultrasonic treatment as the ultrasonic treatment is not able to fully penetrate the entire mixture. The damping properties of the material used affects the channel depth required. It is also important to ensure the gap is not too small as too small of a gap/depth will increase resistance (and therefore reduce output). Another important design parameter is the baffle setup. Such a baffle setup is part of the streamline channels and allows for flow thru a designated flow channel. These baffles can divide the treated area into one or more treatment zones cylindrically situated around the extruder. In one embodiment the baffles create one treatment section. In another embodiment the baffles create two treatment sections directly opposite one another. In still another embodiment the two treatment sections are immediately adjacent to one another. In still another embodiment the baffles are arranged to create three of more treatment sections.

In various embodiments the number of ultrasonic horns may vary. The embodiment mentioned previous discloses two ultrasonic horns at opposite sides of the extruder. In another embodiment one ultrasonic horn may be utilized. In another embodiment three of more ultrasonic horns may be utilized. The limitation regarding the number of horns depending only upon the available area of the treatment zones, the number of ultrasonic horns available and the baffle setup employed. Each ultrasonic horn is able to treat a set amount of area depending on the processing setup. Another limitation involves ultrasonic over treatment, with too strong of an ultrasonic treatment stalling the ultrasound application, therefore proper sizing of the ultrasonic horn is important.

As stated previously, the residence time in the ultrasonic treatment zone is a critical factor as longer residence times lead to breakdown of the polymer and/or nanofiber. Therefore in one embodiment the residence time in the ultrasonic zone is less than 60 seconds. In another embodiment the residence time in the ultrasonic zone is less than 30 seconds. In still another embodiment the residence time in the ultrasonic zone is less than 15 seconds.

In one embodiment the area immediately preceding the ultrasonic treatment zones can be broken into one or more zones, such zones being utilized for premixing, mixing, dispersing the filler and/or heating the compound. In one embodiment one zone precedes the ultrasonic treatment area. In another embodiment two zones precede the ultrasonic treatment area. In still another embodiment three zones precede the ultrasonic treatment area. In another embodiment containing two or more treatment zones prior to the ultrasonic treatment area, one zone is utilized for dispersive mixing and a second zone is utilized for distributive type mixing. The addition of a mixing zone after the ultrasonic treatment zone is detailed as another embodiment. Such a zone must be designed so as to not further breakdown the ultrasonically treated product. Any additional mixing after ultrasonic treatment risks additional breakage of the fibers. Any utilization of this embodiment should account for this risk in the design/setup.

In particular, Figures 2(A) and 2(B) depict comparison SEM micrographs (scale of 20 and 10 µm are indicated in micrograph A and B, respectively). Clearly, the ultrasonically treated compound shows that the bundles of CNF's are dispersed in the PEI matrix to the level of individual nanofibers having diameters of about 200 nm. This occurred at a mean residence time of 7.0 seconds in the ultrasonic zone. It should be noted that information concerning the change of the length of CNT's and CNF's, if any, in comparison with their original length in bundles may be varied.

Experimentation allows the user to determine optimum processing variables. Procedures are conducted on both CNF/polymer and MWCNT/polymer composites and accomplish the following: 1) determining adequate gap, flow rate (residence time in ultrasonic zone), amplitude, pressure and temperature; 2) determining optimal processing conditions for the breakup of the bundles initially existing in CNF's and MWCNT's; 3) determining the effects of ultrasonic waves on rheological properties of compounds as affected by processing conditions and content of CNF's and MWCNT's; 4) determining optimum mechanical properties and electrical conductivity of moldings prepared from nanocomposites containing CNF's and MWCNT's.

In one embodiment, high performance and high temperature thermoplastics and thermosets are used. The thermoplastics used can be but are not limited to polyetheretherketone (PEEK), 150P and 380G/Victrex, polyetherimide (PEI), Ultem 1000/GE, polyamideimide (PAI), Torlon 4000TF/Amoco, thermotropic liquid crystalline polymer (LCP), Vectra A950/Ticona. Thermosets include but are not limited to phenylethynyl terminated imide (PETI), PETI-330/Ube Industries. PETI materials are currently considered for use as a matrix for manufacturing high performance carbon fiber-reinforced composites by resin transfer molding.

The CNF's used are VGCF Pyrograf III PR19HT obtained from Applied Sciences. The diameter and length of nanofibers is 100-200 nm and 30-100 µm. The advantage of incorporation of these CNF's into various polymers is that they provide composites with electrically conductive properties. The CNT's used are the multi-wall carbon nanotubes (MWCNT's) from the Nanoamor, Inc. chosen as they are much less expensive than the single wall carbon nanotubes (SWCNT's).

The materials are chosen for specific reasons. Structural composite applications on advanced aerospace vehicles such as high speed aircraft and reusable launch vehicles require high temperature, high performance resins. Major applications of fiber-reinforced composites are in the field of aerospace and military due to their easy reparability and low weight for higher speeds and increased payloads. Carbon fiber composites have become the primary material in many wings, fuselage and empennage components as well as secondary structures of many commercial aircrafts.

A typical problem for polymers used in structural applications in aerospace is electrostatic charge (ESC) buildup causing these inherently insulating materials to become charged and behave like capacitors and discharge in a single event causing catastrophic damages to the surrounding materials and electronics. Thus, it is essential that the resins possess sufficient electrical conductivity to dissipate the ESC buildup without compromising their processability or mechanical properties. From the perspective of biological safety, it is necessary to consider electromagnetic interference (EMI) and radio frequency interference (RFI) shielding materials for applications in the aerospace industry for both civilian and military aircrafts. Due to the skin effect, a composite material having a conductive filler with a small unit size of the filler is more effective than one having a conductive filler with a large unit size of the filler as the unit size of the filler should be comparable to or less that the skin depth. Polymer-matrix composites containing conductive fillers are attractive for shielding due to their processability which helps to reduce or eliminate the seams in the shield which are encountered in the case of metal sheets and tend to cause leakage of the radiation. In order for a conductive filler to be highly effective, it preferably should have a small size (skin effect), a high conductivity (for shielding by reflection) and a high aspect ratio (for connectivity) making CNF's and MWCNT's highly suitable filler components in composites.

Experimentation allows the user to determine optimum processing variables and thereby the invention accomplishes: 1) determining the dispersion of CNF's and MWCNT's for each polymer; 2) preparing and studying injection molded samples of CNF/polymer nanocomposites from the materials compounded by the ultrasonic single screw extruder setup using a mini-jet injection molder, 3) preparing and studying injection molded samples of MWCNT/polymer nanocomposites from the materials compounded by the ultrasonic micro-compounder using mini-jet injection molder, 4) accumulating data on performance characteristics of products made from each prepared nanocomposite such that optimal conditions of the ultrasonic compounding can be specified; 5) accumulating data on rheological properties of compounds and electrical and structural characteristics of the nanocomposite products.

Processing and characterization techniques known in the art are utilized. The polymer powder or pellets are dry mixed with CNF's and MWCNT's using a rotating mill for a specified duration. In one embodiment concentration of CNF's in the compounds are varied from 0 to 20 wt% and concentration of MWCNT's are varied from 0 to 10 wt%. Experiments during this milling process indicate only bundles of CNF's and MWCNT's are dispersed in the matrix. The dry blended CNF/polymer and MWCNT/polymer mixtures are fed, respectively, into the ultrasonic twin screw extruder, and ultrasonic single screw extruder, to carry out melt compounding at various processing conditions. In some embodiments the compound stream is quickly cooled and solidified upon exit from the extruders with a water trough and palletized while in other embodiments the stream is fed directly to an injection mold or into an extruded shape, while in another embodiment the compound stream is extruded as a film.

The high precision feeders are used to control flow rate of materials fed into extruders. In compounding, process independent variables are flow rate and gap thickness in the ultrasonic zone (determining the mean residence time in the treatment zone), screw rotational speed, temperature and ultrasonic amplitude. The dependent variables are pressure in the treatment zone and ultrasonic power consumption. In addition, the pressure and power consumption can be varied by installing dies of various resistances at the exit of the single screw and twin screw extruders. These independent and dependent variables are recorded. Both setups are equipped with a laptop computer and the data acquisition systems based on National Instrument software.

The prepared compounds are used for rheological and structural measurements. Rheological measurements are carried out using both an Instron capillary rheometer and ARES rheometer. Thermal transitions are measured by the differential scanning calorimeter (DSC). The isothermal and non-isothermal DCS runs are also used to carry out curing kinetic measurements of PETI/MWCNT compounds. The method utilized earlier for determining cure and crystallization kinetic constants is used for this purpose. The obtained data allows one to specify conditions of curing of nanocomposites based on PETI. Electrical conductivity is measured using a Keithley Instrument. Microscopy studies of compounds and moldings are carried out by using HR SEM, SEM, TEM and AFM. In addition, compounds are dissolved in a suitable solvent to separate CNF's and MWCNT's from the compound. This allows us to use electron microscopy to determine the occurrence of any reduction in their length during the compounding process. The obtained images are used to carry out fiber length measurements using an image analyzer. The frequency versus the CNT and MWCNT length is determined to evaluate the amount of their degradation during melt compounding. Mechanical property) measurements are taken on the injection molded samples prepared by mini-jet molder.

One objective of the present invention is manufacturing high performance polymer nanocomposites consisting of high temperature thermoplastic and thermoset resins filled with carbon nanotubes (CNT's) and carbon nanofibers (CNF's). The invention discloses a novel ultrasound assisted extrusion-mixing process and apparatus that allows one to break bundles existing in CNT's and CNF's. Experimentation indicates the dispersion of CNT's and CNF's in a polymer matrix occurs on an individual level and at very short residence times (on the order of seconds). The proposed melt mixing technology is intended to replace the currently used technology requiring a solution-based batch process with prolonged ultrasonic irradiation (minutes and hours) followed by the removal of solvent. It is expected that dispersion and stronger interaction between the polymer and the individual CNT's and CNF's will produce nanocomposites with a significant enhancement of properties including strength, modulus, electrical conductivity, permeability, thermal resistance, and heat distortion temperature.

The present invention allows varying the processing parameters to determine the effect of CNT's and CNF's in polymer matrices. This new technology permits one to achieve a single step extrusion mixing process for preparing compounds for manufacturing nanocomposite products using modem manufacturing techniques in contrast to the multi-step batch solution processes currently used. This provides a basis for preparing a new class of materials specifically designed to have a unique and unprecedented combination of properties.

The majority of applications for polymer nanocomposites containing CNT's and CNF's are in the field of aerospace and military due to their low weight allowing one to achieve higher speeds and increased payloads. Carbon fiber reinforced composites have become the primary material in many wings, fuselage and empennage components as well as secondary structures of many commercial aircrafts. They are also selected for missile structures due to their low weight which increases the missile range and payload capacity. The proposed technology provides a means of preparing a new class of light weight high temperature and high performance polymeric nanocomposites specifically designed to have increased strength-to-mass ratio and improved electrical conductivity. Other benefits include improved heat distortion temperature and increased electromagnetic shielding. Products formed from the composites of the present invention are useful in a variety of civil, military and biomedical applications. Additional property improvement of the final product includes increased mechanical strength, increased modulus and increased elongation at break.

### Single Screw Ultrasonic Extrusion

### Materials

CNFs, Pyrograf-III, PR-19-HT, were provided by Applied Sciences, Inc., Cedarville, OH, and used without any further purification. PEI, Ultem 1000P, in powder form from GE Plastics was used as received. Mixtures of various concentrations of the PEI powder and CNFs were prepared by dry mixing using ball milling for 24 hrs. The mixtures were then dried under vacuum at 120°C for a minimum of 24 hrs prior to processing.

### Equipment and Procedures

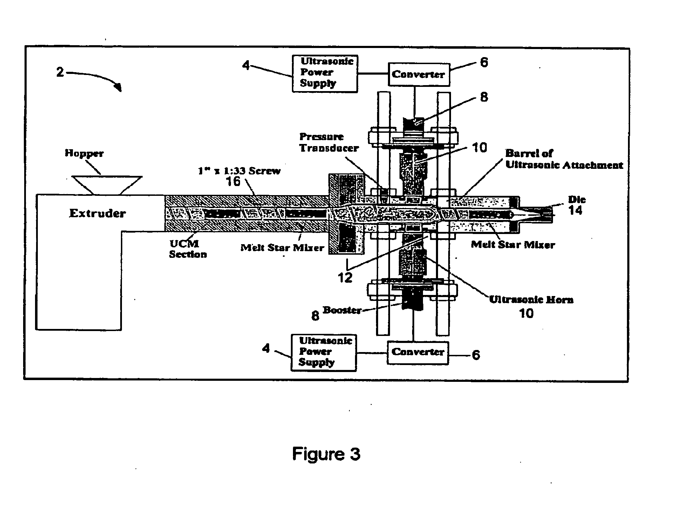

A single screw ultrasonic compounding extruder having a screw diameter of 25.4 mm and a UD ratio of 33:1 was used. It was built based on a Killion extruder with UD of 24. The ultrasonic extruder was equipped with a UCM and two Melt Star mixers along with the ultrasonic treatment zone along the barrel. A schematic drawing of the ultrasound extruder 2 is shown in Figure 3. Two 6 kW ultrasonic units consisting of power supplies 4, converters 6, boosters 8 and horns 10 were used to generate ultrasonic waves at a frequency of 20 kHz. Cylindrical horns 10 of 25.4 mm diameter were used. The gap opening for the flow of compound in ultrasonic zone was kept at 2.54 mm. The mean residence time in the ultrasonic treatment zone 12 was 7 s at a flow rate of 15 g/min. The extrusion temperature was varied from 320 to 340°C from the feed zone to the die 14. Screw 16 speeds of 30, 60 and 100 rpm for flow rate of 15 g/min were used. The ultrasonic treatment was carried out at various amplitudes. Unfilled PEI was also processed using the same procedure to produce a control sample.

Microscopic analysis of injection and compression moldings was conducted by means of SEM. ARES was used to measure the storage (G') and loss (G") moduli at a fixed strain amplitude of 2% in dynamic frequency sweep mode at 340°C. Instron tensile testing machine was used to carry out tensile tests at a crosshead speed of 5 mm/min at room temperature on specimens prepared by a HAAKE mini-jet molder at a melt and mold temperature of 340°C and 120°C, respectively.

Disks with a thickness of 1 mm and a diameter of 60 mm were prepared by compression molding to measure the electrical volume resistivity by means of an electrometer, Kiethley Instrument Model No.6517A, attached to an 8009 test fixture was used. A voltage of 10V was applied for 60 s in the test.

### Process Characteristics

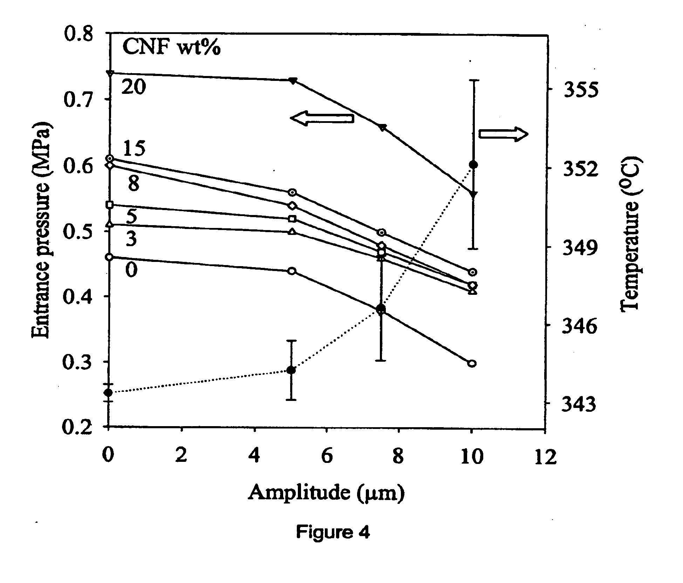

The entrance pressure and temperature of the ultrasonic treatment zone 12 as a function of ultrasonic amplitude is shown in the graph of Figure 4. The entrance pressure is substantially reduced as the ultrasonic amplitude is increased. This decrease of pressure is caused by the combined effect of the reduced viscosity of materials and reduction in friction of polymer melt along the die wall. It is also evident from Figure 4 that the pressure increases with increasing CNF concentration. It is interesting to note that the pressure increases slightly up to 15 wt% and increased significantly at 20 wt% CNF concentration. Such a behavior is apparently attributed to the percolation threshold occurring between 15 and 20 wt% CNF/PEI composites. Figure 4 also details the temperature at the ultrasonic treatment zone increasing with increasing ultrasonic amplitude.

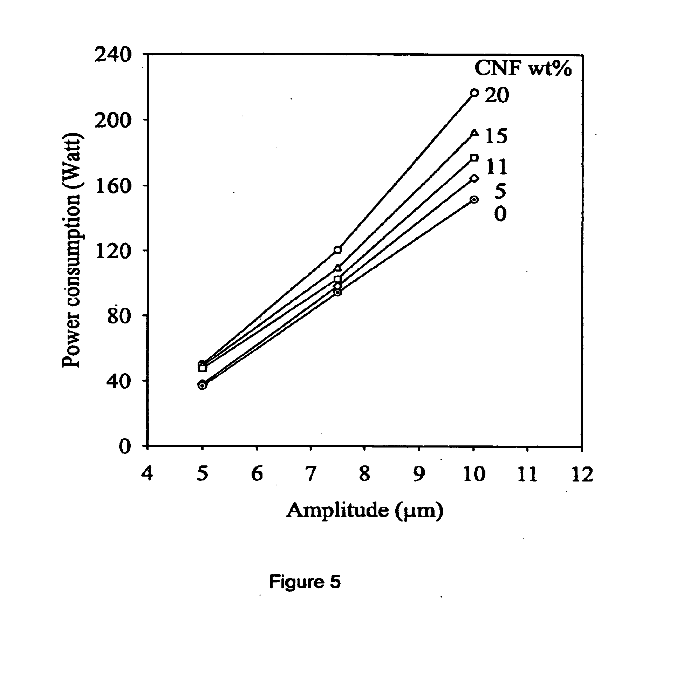

The ultrasonic power consumption during ultrasonic treatment of PEI at various CNF concentrations as a function of ultrasonic amplitude is shown in Figure 5. This set of data is obtained at 60 rpm. Upon increase of the CNF content from 0 to 20 wt%, an increase of the power consumption was observed with an increase of amplitude.

### Rheology

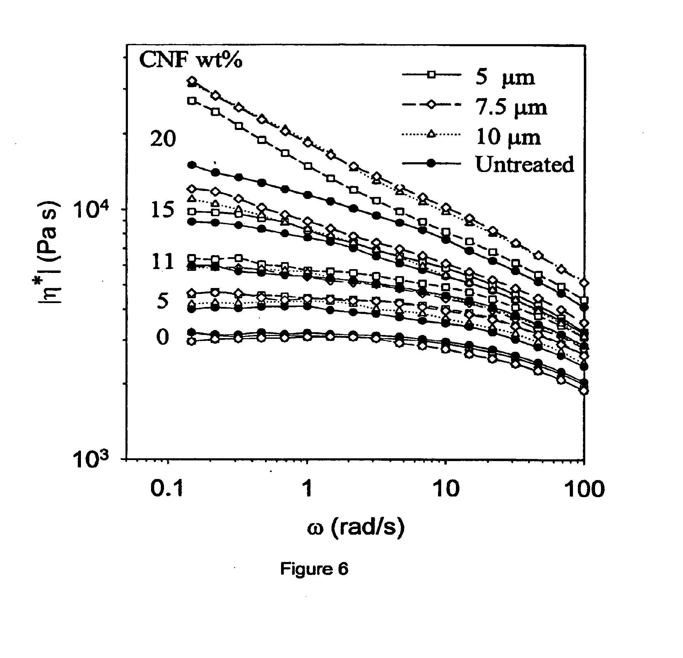

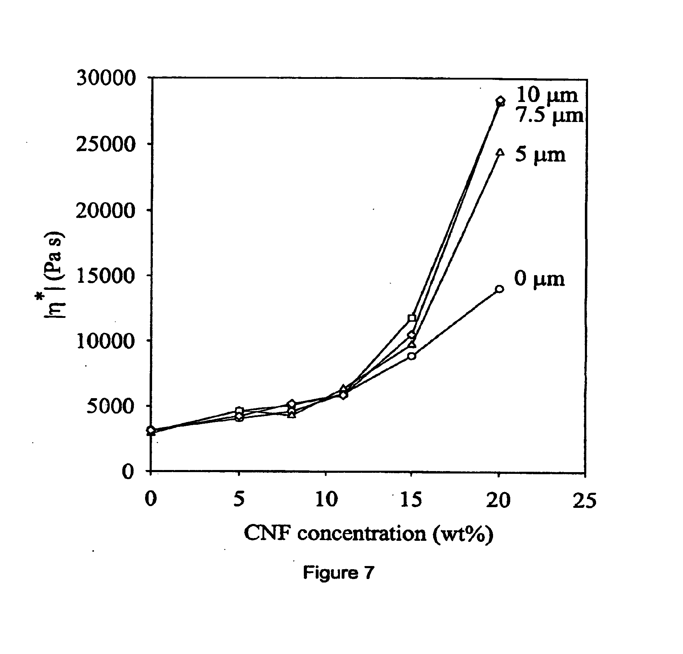

Figure 6 shows the complex viscosity as a function of frequency for the untreated and ultrasonically treated CNF/PEI nanocomposites containing 0 to 20 wt% CNFs. The viscosities of CNF/PEI composites increase with increasing CNF content. Viscosity of ultrasonically treated composites is consistently higher compared to that of untreated ones. At the same time, viscosity of virgin PEI slightly decreases with ultrasonic treatment. The viscosity of nanocomposites obtained at an amplitude of 10 µm shows slightly lower values than those at amplitudes of 5 µm and 7.5 µm. This is not only because of the thermomechanical degradation of polymer, but also because of a possible breakage of nanofibers during ultrasonic treatment. This explanation is supported by experimental results of the length of CNFs extracted from composites as shown below. As the CNF concentration is increased, viscosity of the nanocomposites exhibits stronger frequency dependence at low frequencies. (below about 1 rad/s) Such a frequency dependence and, therefore, stronger shear thinning is especially pronounced for ultrasonically treated composites. This strong shear thinning behavior can be attributed to a greater degree of polymer-CNF interaction due to dispersion of the CNFs leading to a reduction of the percolation threshold in nanocomposites. It means that the viscosity curve is a possible tool for identifying the presence of the percolation threshold for these composites. At low frequencies, the viscosity seems to exhibit a percolation threshold at around 15 wt% of CNF's, as seen in Figure 7. This confirms that the nanocomposite at concentrations between 15% and 20% CNFs passes through the percolation threshold evidently created by a better dispersion of CNFs by ultrasonic treatment. This effect is not seen on untreated nanocomposites.

### Electrical and Thermal Conductivity

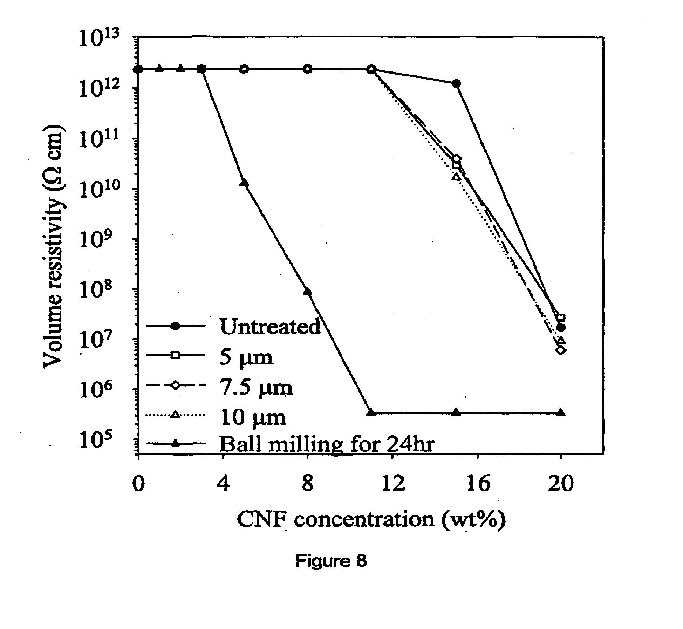

Figure 8 shows the electrical volume resistivity of nanocomposites as a function of CNF concentration. For ultrasonically treated composites, the resistivity at 15 wt% of CNF loading dropped by about 2 orders of magnitude. At the same time, a similar drop in the resistivity of nanocomposites extruded without ultrasonic treatment occurs at 17 wt% CNF loading. These concentrations correspond respectively to the onsets of percolation. The volume resistivity is dependent not only on the fiber concentration, but also on the fiber length and their dispersion. Clearly, ultrasonic treatment leads to an Improved dispersion of the CNFs. It is also seen from Figure 8 that composites prepared by ball milling show percolation threshold at much lower CNF concentration (4 wt %). This is due the presence of long and aggregated fibers in these composites.

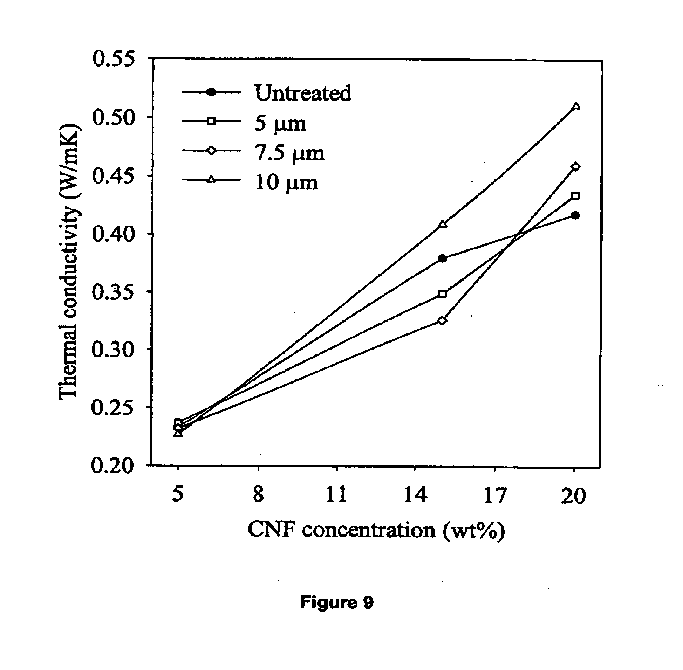

Values of the thermal conductivity of untreated and ultrasonically treated CNF/PEI nanocomposites as a function of CNF content are presented in Figure 9. The thermal conductivity of PEI/CNF nanocomposites increases from 0.23 to 0.52 W/mK as the CNF concentration increases from 5 wt% to 20 wt%. The thermal conductivity of CNFs is 20 W/mK, (as reported by Applied Sciences, Inc.) Although the thermal conductivity increases by more than two times with the addition of the CNFs, the prepared nanocomposites do not show a percolation threshold based on these measurements. This is due to the heat transport mainly occurring through the polymer matrix at the fiber concentrations presented. The thermal conductivity of 20 wt% CNF/PEI composites increases with increasing ultrasonic amplitude. This is the result of the continuously improved dispersion of CNFs by increasing ultrasonic power consumption.

### Microscopic Analysis

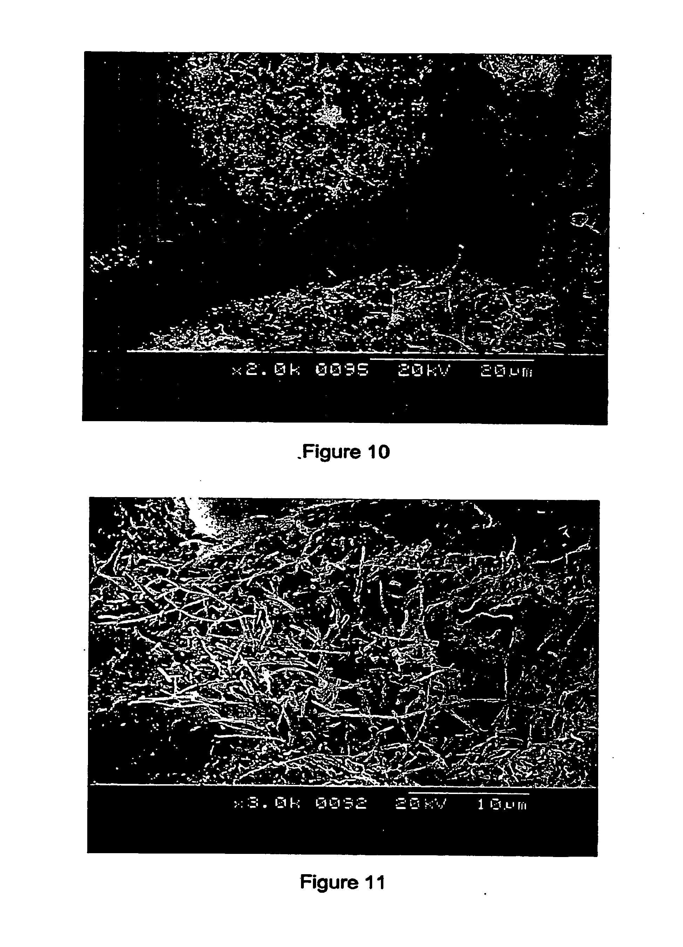

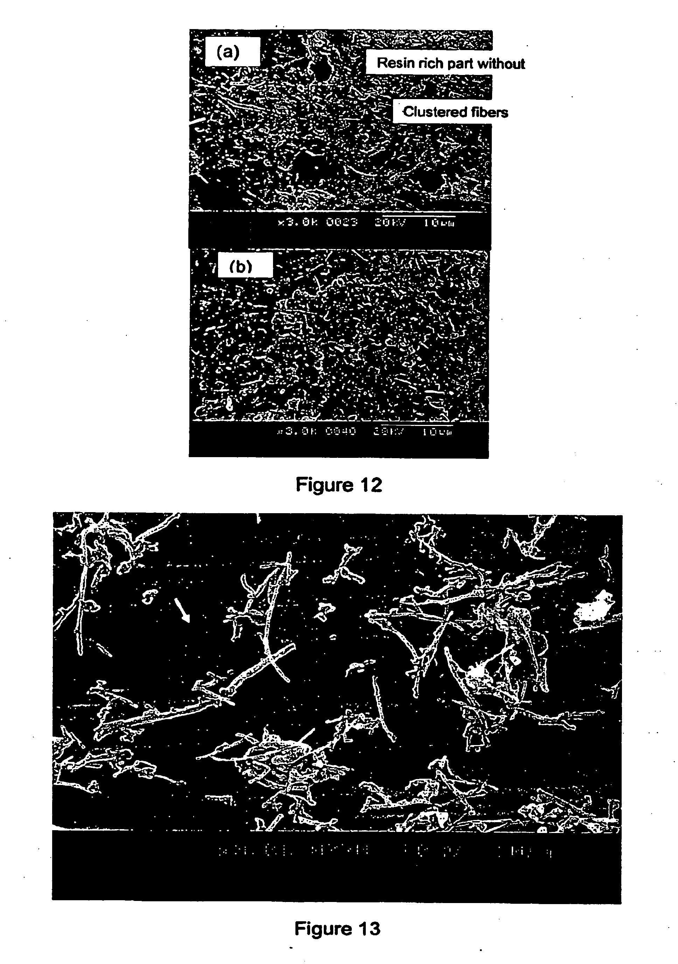

Figure 10 shows SEM micrographs of CNFs as received and detail large aspect ratios (> 100). The diameters of these nanofibers vary from 70 nm to 200 nm and sizes of their bundles range from 10 µm to 50 µm. After ball milling of CNFs with PEI powder, the bundles of CNFs remain. Interwoven bundles and aggregates of CNFs up to 50 µm in size were observed in SEM micrographs as shown in Figure 11. Figure 12 depicts SEM micrographs of fractured surfaces of 15 wt% CNF/PEI nanocomposites without and with ultrasonic treatment at an amplitude of 10 µm. The CNFs are clustered in the matrix with about 2∼5 µm diameter in untreated composites. In the treated nanocomposites CNFs are not clustered but still in contact with each other. The latter could be the reason why the percolation threshold is achieved at a lower concentration of about 15 wt% in ultrasonically treated nanocomposites.

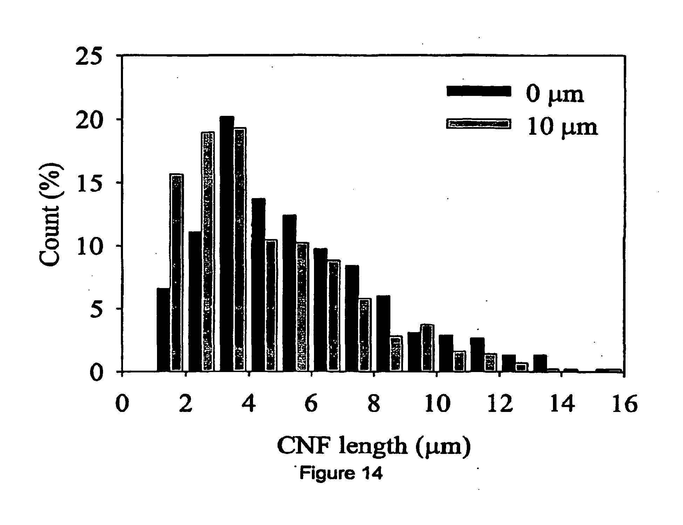

Figure 13 shows the SEM micrograph of CNFs extracted from the nanocomposite. As seen from this figure, the length of extracted CNFs is 2∼10 µm which is lower than their initial length of 30-100 µm reported by Applied Sciences, Inc. The degradation of fiber length is attributed to the high shear in extruder and to the action of ultrasound. In particular, Figure 14 shows the length distribution of CNFs in nanocomposites obtained without and with ultrasonic treatment, respectively, at a screw rotation speed of 60 rpm. Only a slight decrease in the fiber length due to ultrasonic treatment is observed.

### Mechanical Properties

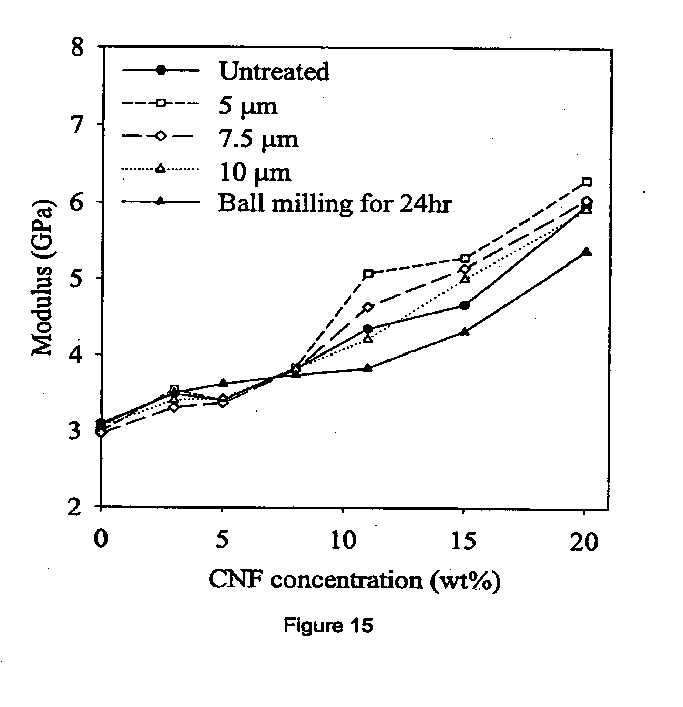

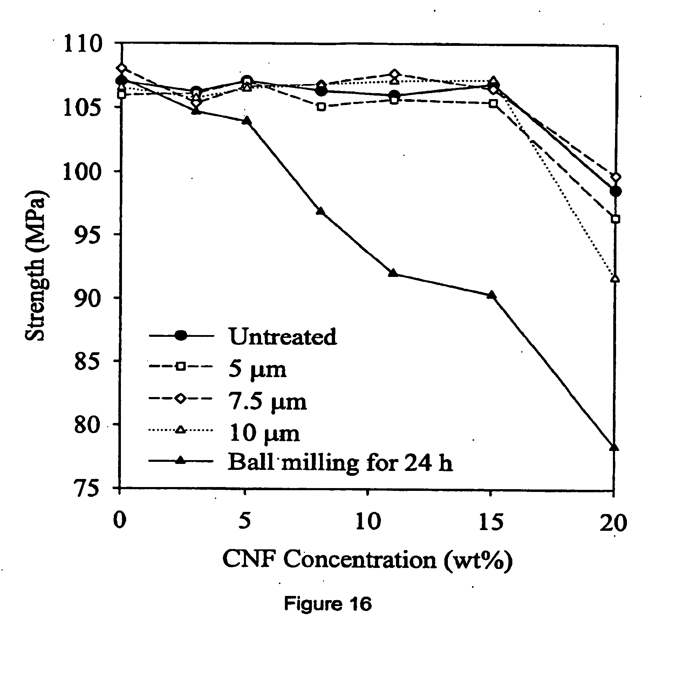

Ultrasonic treatment at an amplitude of 5 and 7.5 µm leads to an increase in the Young's modulus of the nanocomposites (Figure 15). Values of the modulus of samples after ball milling are lower than those of extruded composites. The strength of PEI/CNF nanocomposites showed little change with ultrasonic treatment. (Figure 16). Also, the strength of nanocomposites does not change up to 15% loading and then slightly decreases. This behavior is attributed to the lack of adhesion between CNFs and PEI matrix. The explanation is supported by the detachment of fibers seen in SEM micrographs depicted in Figure 12. The strength of composites obtained after ball milling is considerably lower in comparison with those of extruded composites.

CNF/PEI nanocomposites with CNF contents up to 20 wt% have been prepared by means of a novel ultrasonic single screw compounding extruder. Based on rheological and electrical conductivity measurements, the estimated percolation threshold in ultrasonically treated CNF/PEI nanocomposites is found to be lower than those of untreated nanocomposites. Furthermore, it was established that high power ultrasound is effective in obtaining relatively homogeneous dispersion with improved electrical and thermal conductivity in the CNF/PEI nanocomposites. An increase of the Young's modulus in CNF/PEI nanocomposites was recorded under ultrasonic treatment, without reduction in the tensile strength. SEM micrographs of dry-mixed PEI/CNF composites by ball milling indicated the presence of CNF bundles. The CNF bundles are absent after compounding using an ultrasonic single screw extruder with ultrasonic treatment.

### Ultrasonic Twin Screw Extrusion

### Materials

Polyetherimide (PEI) in powder form made by GE plastics under trade name ULTEM 1000P was used as received. The multiwalled carbon nanotubes (MWNT) were provided by Nanostructured & Amorphous Materials, and were used as received. The MWNT had an outside diameter of 10-20 nm and length varied from 0.5 - 200 µm.

### Nanocomposite Preparation

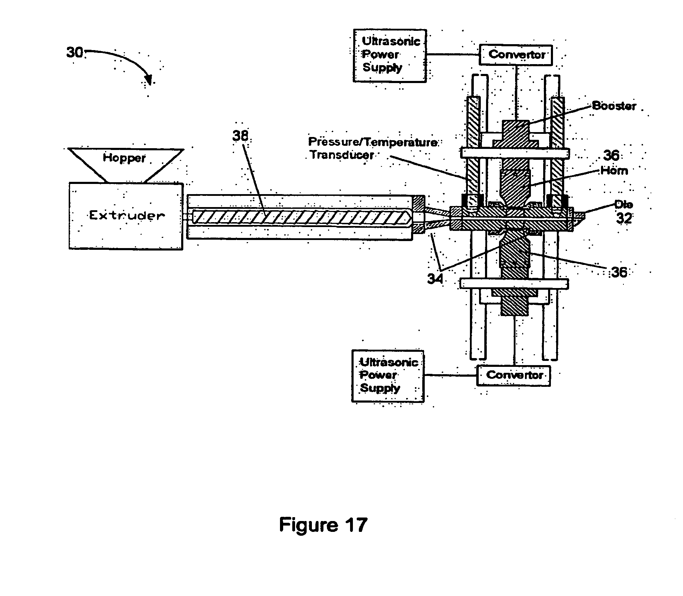

In one embodiment, the PEI powder was mixed with 1, 2, 5, and 10 wt% MWNT loading by ball milling for 24 hrs. The mixture was then dried for a minimum of 24 hrs at 110 °C in a vacuum oven prior to processing. For melt processing, a continuous co-rotating twin screw extruder 30 equipped with high power ultrasonic die 32 attachment was developed as shown in Figure 17. The micro-extruder (PRISM) has diameter of 16 mm with L/D=25. Two pressure transducers were placed in the die zone immediately before and after the ultrasonic treatment zone 34. Two horns 36 oscillating at a frequency of 40 kHz were attached to the die zone with a 4 mm gap size and molten compound was continuously subjected to amplitudes from 0-6.0 µm. The temperature in the barrel section was set from feed zone to die zone as 280°C, 340°C, 350°C, 360°C, 360°C. The screw 38 speed was set at 50 rpm and 0.5 lb/hr feed rate was used.

Tensile bars according to ASTM D-638 were prepared using the HAAKE mini-jet piston injection molder at a temperature of 360°C and mold temperature of 130°C. The injection pressure was 740 bars in each case. Prepared nanocomposites were compression molded into discs of 25 mm diameter and 2.2 mm thickness at 300°C using the Carver 4122 compression molding press, for the rheological measurements. The samples for electrical conductivity measurement were also compression molded into discs of 90 mm diameter and 1 mm thickness.

### Rheological Measurements

The rheological properties of the nanocomposites were studied using an ARES, TA Instruments. A 25 mm parallel plate geometry in oscillatory shear mode with dynamic frequency sweep test was used at 340 °C for a fixed strain amplitude of 2%.

### Electrical Resistivity

A Keithley electrometer (Model 6517A) equipped with an 8009 test fixtures was used to measure the volume resistivity of the samples in accordance with the ASTM D257 method using applied voltage of 0.1V.

### Morphological Studv

Surface morphology and dispersion of CNT's was investigated on cryofractured injection molded impact bar samples using a field emission HRSEM (Model JEOL JSM-7401 F).

### Mechanical Properties

Tensile measurements on injection molded samples were carried out using an Instron test machine Model 5567, Instron Corp. Tests were carried out according to ASTM D 638 test method at cross head speed of 5mm/min using a 30 kN load cell and an extensometer.

### Process Characteristics

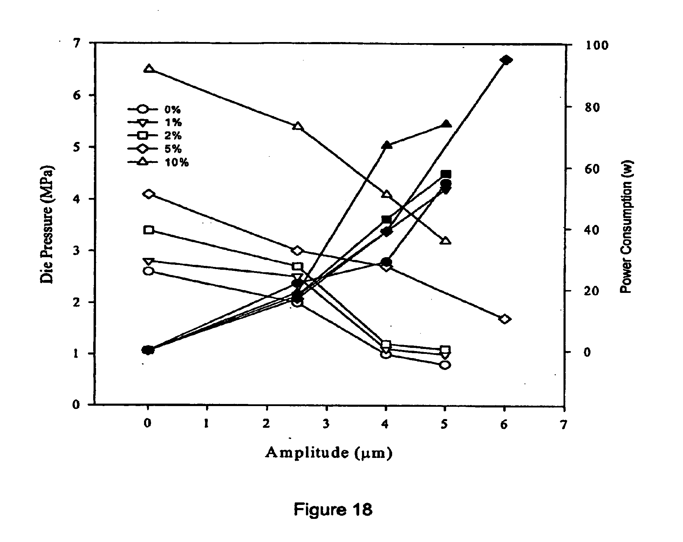

Figure 18 shows the entrance die pressure and power consumption for various wt% loadings of CNT's as a function of ultrasonic amplitude. The measured pressure is before the ultrasonic treatment of PEI/MWNT composites. A continuous decrease in pressure with increasing ultrasonic amplitude was observed. This is from a combination of heating from dissipated energy from ultrasound, cavitational effect from ultrasonic waves leading to some thixotropic and permanent changes in polymer, reduction in friction at die walls and horn surfaces due to ultrasonic vibrations and possible shear thinning effect created by ultrasound waves. The die pressure increases with the increase of CNT loading.

The measured power consumption is the total power consumption during the treatment of nanocomposites, a part of which is dissipated as heat whereas the rest is being utilized to disperse nanotubes in melt and increasing the polymer-nanotube interaction. It was observed that power consumption increased with the increase of ultrasound amplitude indicating more energy was transmitted from horns to polymer melt.

### Rheology

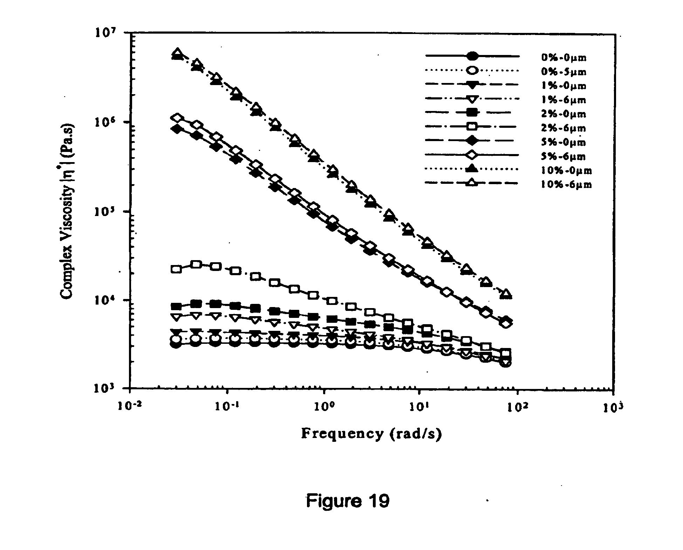

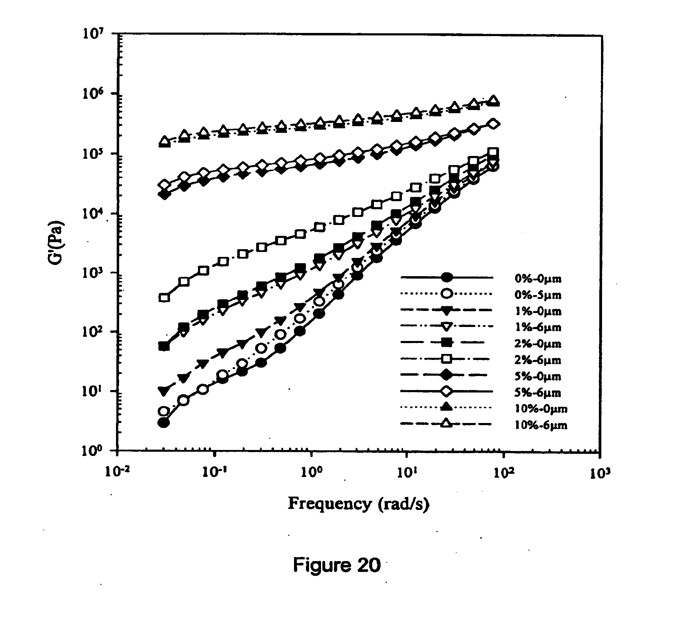

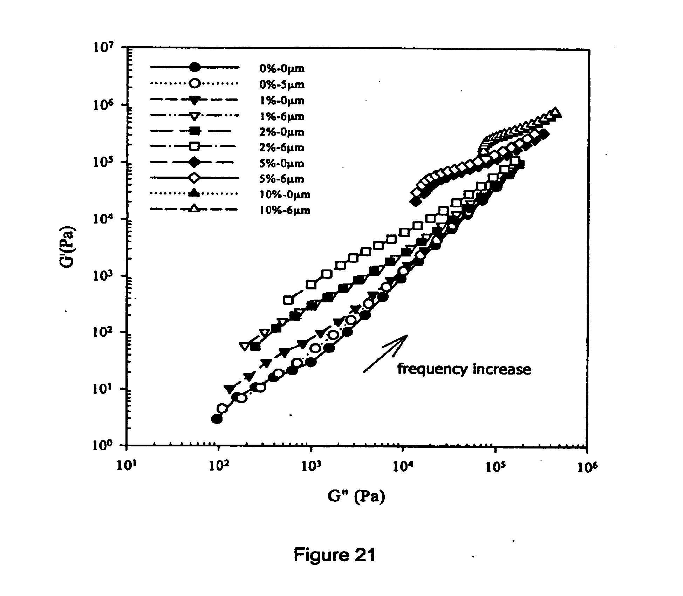

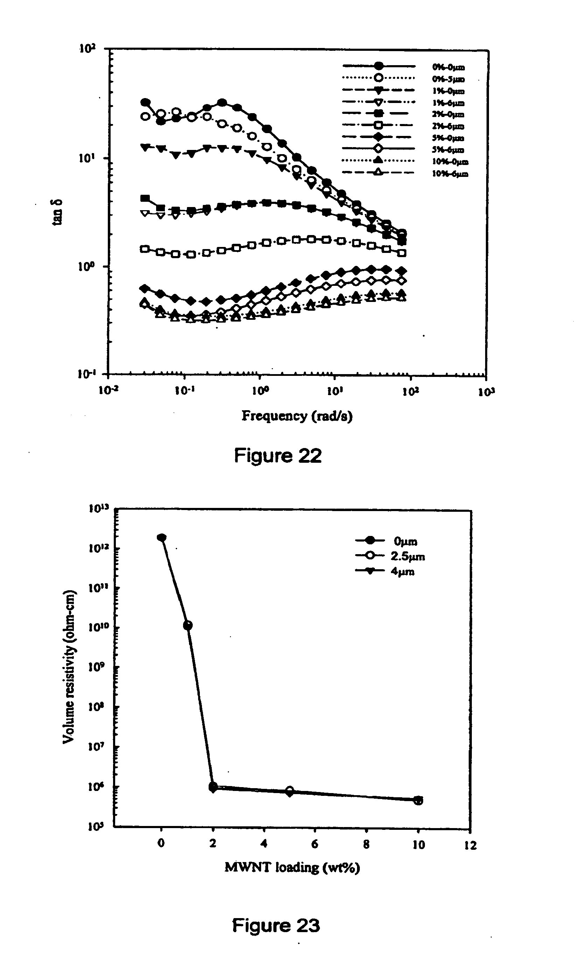

The effect of ultrasound on the complex viscosity of nanocomposites as a function of frequency at different CNT loadings is shown in Figure 19. There is a tremendous increase in the complex viscosity with the increase of loading of CNTs. It was observed that ultrasonic treatment increased the complex viscosity of nanocomposites and the effect is more pronounced at low frequency. The increase in complex viscosity due to ultrasound was attributed to better dispersion of nanotubes in a polymer matrix with enhanced polymer-nanotube interaction. Storage modulus (G') of nanocomposites was increased by orders of magnitude with the increase in CNT loading (Figure 20). It was observed that at higher loadings, G' vs. frequency curve is almost reaching a plateau at low frequency Indicating the existence of interconnected structure of anisotropic filler. The increase in storage modulus with ultrasound further indicates improved polymer-nanotubes interaction as result of better dispersion of CNTs. The effect of CNT's loading and ultrasound on nanocomposites can be seen from the plot of G' vs. G" in Figure 21. At a given G" value, the G' increased significantly with nanotube content. It was observed that ultrasonic treatment increases G' at given G" for nanocomposites at all loadings. The effect of ultrasound and nanotubes loading on damping characteristics of the nanocomposites is shown in Figure 22. As the nanotube content increases the tan δ decreases and the curve becomes more flat in the low frequency region. A further decrease in tan δ was observed on the ultrasonically treated nanocomposites indicating the improved interaction between nanotubes and polymer matrix.

### Electrical Resistivity

The volume resistivity results of nanocomposites as a function of CNT's loading are plotted in Figure 23. The volume resistivity decreased by 10⁷ Ω-cm with 10 wt% loading. A sharp reduction in resistivity is observed between 1 and 2 wt% nanotubes content indicating the percolation threshold between 1 and 2 wt% nanotube loading. No significant change in resistivity occurred with further increasing the nanotube loading up to 10 wt% and with ultrasonic treatment

### Mechanical Properties

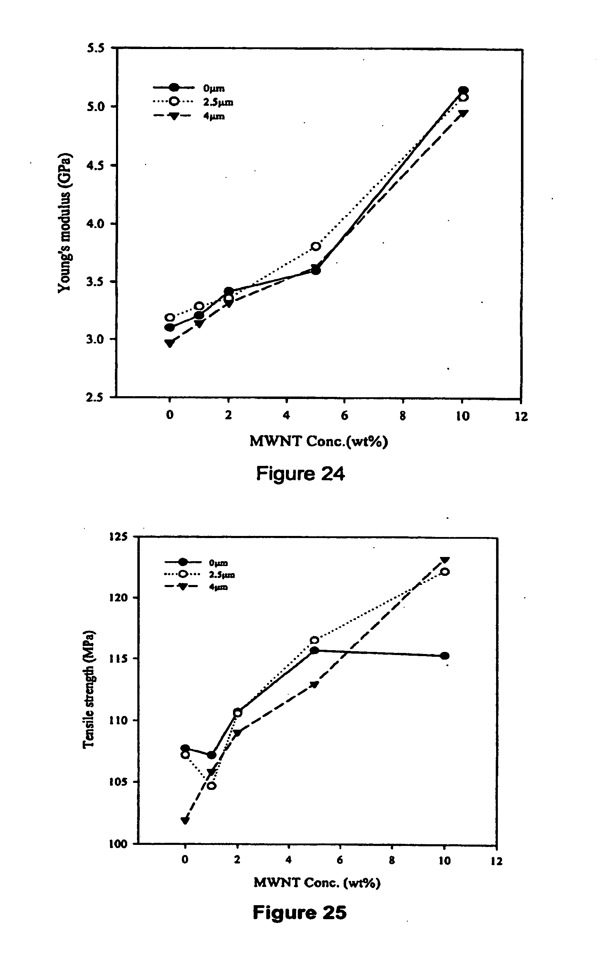

The ultrasonic treatment and addition of nanotubes has a significant effect on the mechanical properties of nanocomposites. From Figure 24, it is seen that for a fixed amplitude of 2.5 µm there is nearly an 80% increase in the Young's modulus for nanocomposites at 10wt% CNT loading as compared to the virgin PEI. The tensile strength increased from 107 to 115 MPa for untreated sample and to 123 MPa for treated samples as shown in Figure 25, clearly indicating that ultrasonic treatment results in increasing the interfacial interactions between polymer matrix and CNTs. On increasing the CNT content the material becomes more rigid, however, in this case both the yield strain and elongation at break was not affected much, in fact for certain conditions treated sample had more elongation at break than untreated samples.

### Morphlology

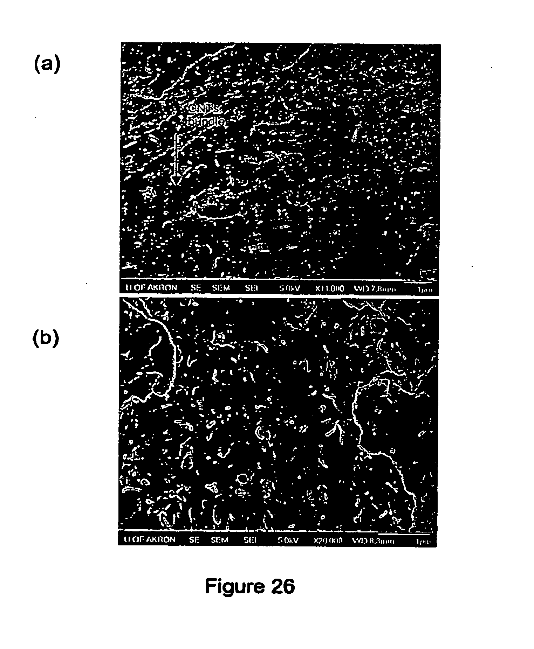

Figure 26 shows HRSEM micrographs of treated and untreated nanocomposites filled with 2wt% CNT's (note difference in relevant scale used). All images have clearly distinguished nanotubes that are randomly oriented and uniformly dispersed. The images show that the nanotubes were dispersed to a level of 50 nm diameter, which is close to the range (10-20nm) of as received CNTs. Not a single CNT bundle was observed for the treated samples.

A new ultrasound assisted melt extrusion process was developed for manufacturing PEI/MWNT nanocomposites. The ultrasonically treated nanocomposites show significant changes in the rheological behavior with tremendous increase in the viscosity, storage modulus and reduced damping characteristics' of nanocomposites as compared to the untreated ones indicating the better dispersion of nanotubes. As a result of ultrasonic treatment the Young's modulus and tensile strength increased without effecting elongation at break and yield strain of nanocomposites.

Although the invention has been described in detail with particular reference to certain embodiments detailed herein, other embodiments can achieve the same results.

## Claims

1. A method for producing polymer composites having improved thermal, electrical and/or mechanical properties comprising:
providing one or more polymers;
providing a filler wherein the filler is one or more nanofibers or one or more nanotubes;
providing a continuous mixer selected from a single or twin screw extruder for mixing the one or more polymers and the filler, and an ultrasonic treatment means having an ultrasonic treatment zone with a frequency in the range from 15 kHz to 1000 kHz, wherein the continuous mixer has two or more treatment zones including the ultrasonic treatment occuring in the second treatment zone or wherein the continuous mixer has at least three treatment zones with the ultrasonic treatment occuring at the third treatment zone, and wherein the ultrasonic treatment means consists of one or more ultrasonic treatment horns;
mixing, in the continuous mixer, the one or more polymers and the filler to create a polymer/filler mixture;
**characterized in that** the method further comprises: feeding the polymer/filler mixture through one or more streamlined channels to the ultrasonic treatment zone through a gap between the screw surface and the ultrasonic treatment horn/s wherein the polymer filler mixture is subject to ultrasonic treatment for less than 60 seconds to thereby further disperse the filler and produce a polymer composite having improved thermal, electrical and/or mechanical properties; and
recovering the ultrasonically treated polymer filler mixture through one or more streamlined exit channels as a polymer mixture product.

2. The method of claim 1 wherein the one or more polymers is a thermoplastic resin and/or a thermoset resin, or wherein the one or more polymers is a thermoplastic rubber and/or thermoset reactive fluid, or wherein the one or more polymers is polyetherimide.

3. The method of claim 1 wherein the one or more nanofibers is a polymer nanofiber, a ceramic nanofiber and/or a carbon nanofiber, or wherein the one or more nanotubes is a carbon nanotube.

4. The method of claim 1 wherein the one or more nanofibers has a diameter between 1 nanometer and 200 nanometers, or wherein the one or more nanofibers has a diameter between 15 nanometer and 200 nanometers.

5. The method of claim 1 wherein the ultrasonic treatment means is carried out at a frequency between 15 kHz and 500 kHz, or wherein the ultrasonic treatment means is carried out at a temperature between 30 °C and 400 °C.

6. The method of claim 1 wherein the ultrasonic treatment means is carried out for less than 30 seconds.

7. The method of claim 1 wherein the ultrasonic treatment zone occurs after the compound exits a mixing zone and enters a pressurized zone.

8. The method of claim 1 wherein the two or more treatment zones includes at least one zone for dispersive mixing and at least one zone for distributive mixing.

9. The method of claim 1 wherein the one or more nanofibers is a carbon nanofiber in a concentration between 0 and 20% weight percent, or wherein the one or more nanotubes are carbon nanotubes in a concentration between 0 and 20% weight percent.

10. The method of claim 1 wherein the ultrasonically treated polymer filler mixture is subsequently cooled with water.

11. The method of claim 1 wherein the polymer mixture product is one or more pellets, one or more films, is fed to an injection molding means or is fed to an extrusion means.

12. An apparatus for mixing polymer and filler comprising:
an ultrasonic treatment zone comprising an ultrasonic treatment means consisting of one or more ultrasonic treatment horn(s) operating in a frequency from 15 kHz to 1000 kHz and designed to allow ultrasonic processing of the polymer filler mixture for less than 60 seconds;
a single or twin screw extruder ; and,
an exit means designed for the exit of the ultrasonically treated mixture from the ultrasonic treatment zone; **characterized in that**: the single or twin screw extruder comprises one or more streamlined channels designed to deliver a premixed mixture trough a gap between the screw surface and one or more ultrasonic treatment horn/s to the ultrasonic treatment zone; and the exit means is designed for the exit of the ultrasonically treated mixture from the ultrasonic treatment zone into one or more streamlined exit channels.

## Patentansprüche

1. Verfahren zur Herstellung von Polymer-Verbundstoffen mit verbesserten Wärme- , elektrischen und/oder mechanischen Merkmalen, umfassend
das Bereitstellen eines oder mehrerer Polymere;
das Bereitstellen eines Füllstoffs, wobei der Füllstoff eine oder mehrere Nanofasern oder eine oder mehrere Nanoröhren ist;
das Bereitstellen eines Durchlaufmischers von einem Einzel- oder Doppelschneckenextruder zum Mischen des einen oder der mehreren Polymere und des Füllstoffs und ein Ultraschallbehandlungsmittel mit einer Ultraschallbehandlungszone mit einer Frequenz im Bereich von 154 kHz bis 1000 kHz, wobei der Durchlaufmischer zwei oder mehr Behandlungszonen aufweist, einschließlich der Ultraschallbehandlung, die in der zweiten Behandlungszone auftritt oder wobei der Durchlaufmischer wenigstens drei Behandlungszonen aufweist, wobei die Ultraschallbehandlung an der dritten Behandlungszone auftritt und wobei das Ultraschallbehandlungsmittel aus einer oder mehreren Ultraschallbehandlungs-Sonotroden besteht;
das Mischen im Durchlaufmischer des einen oder der mehreren Polymere und des Füllstoffs, um eine Polymer-/Füllstoffmischung zu erzeugen;
**dadurch gekennzeichnet, dass** das Verfahren weiterhin Folgendes umfasst:
das Zuführen der Polymer-/Füllstoffmischung durch einen oder mehrere Stromlinienkanäle zur Ultraschallbehandlungszone durch einen Spalt zwischen der Extruderoberfläche und der Ultraschallbehandlungs-Sonotrode(n), wobei die Polymer/Füllstoffmischung weniger als 60 Sekunden lang einer Ultraschallbehandlung ausgesetzt wird, um somit den Füllstoff weiter zu dispergieren und einen Polymerverbundstoff mit verbesserten Wärme-, elektrischen und/oder mechanischen Merkmalen zu produzieren; und
das Zurückgewinnen der durch Ultraschall behandelten Polymer/Füllstoffmischung durch einen oder mehrere Stromlinien-Ausgangskanäle als ein Polymermischprodukt.

2. Verfahren nach Anspruch 1, wobei ein oder mehrere Polymere ein thermoplastischer Kunststoff und/oder ein warm gehärteter Kunststoff ist oder wobei das eine oder die mehreren Polymere ein thermoplastischer Gummi und/oder eine warm gehärtete reaktive Flüssigkeit ist oder wobei das eine oder die mehreren Polymere Polyetherimid ist.

3. Verfahren nach Anspruch 1, wobei die eine oder mehreren Nanofasern eine Polymernanofaser, eine keramische Nanofaser und/oder eine Kohlenstoffnanofaser ist oder wobei die eine oder mehreren Nanoröhren eine Kohlenstoffnanoröhre ist.

4. Verfahren nach Anspruch 1, wobei die eine oder mehreren Nanofasern einen Durchmesser von zwischen 1 Nanometer und 200 Nanometern aufweist oder wobei die eine oder mehreren Nanofasern einen Durchmesser von zwischen 15 Nanometern und 200 Nanometern aufweist.

5. Verfahren nach Anspruch 1, wobei das Ultraschallbehandlungsmittel zu einer Frequenz von zwischen 15 kHz und 500 kHz ausgeführt wird oder wobei das Ultraschallbehandlungsmittel zu einer Temperatur von zwischen 30 °C und 400 °C ausgeführt wird.

6. Verfahren nach Anspruch 1, wobei das Ultraschallbehandlungsmittel weniger als 30 Sekunden lang ausgeführt wird.

7. Verfahren nach Anspruch 1, wobei die Ultraschallzone auftritt, nachdem die Verbindung aus einer Mischzone austritt und in eine mit Druck beaufschlagte Zone eintritt.

8. Verfahren nach Anspruch 1, wobei die zwei oder mehr Behandlungszonen wenigstens eine Zone zum dispergierenden Mischen und wenigstens eine Zone zum verteilenden Mischen enthalten.

9. Verfahren nach Anspruch 1, wobei eine oder mehrere Nanofasern eine Kohlenstoffnanofaser in einer Konzentration von zwischen 0 und 20 Gew.-% ist oder wobei das eine oder die mehreren Nanoröhren Kohlenstoffnanoröhren in einer Konzentration von zwischen 0 und 20 Gew.% sind.

10. Verfahren nach Anspruch 1, wobei die mit Ultraschall behandelte Polymer/Füllstoffmischung anschließend mit Wasser abgekühlt wird.

11. Verfahren nach Anspruch 1, wobei das Polymermischprodukt ein oder mehrere Granulate, ein oder mehrere Folien ist, einem Spritzblasmittel zugeführt wird oder einem Extrusionsmittel zugeführt wird.

12. Apparat zum Mischen von Polymer und Füllstoff, umfassend:
eine Ultraschallbehandlungszone, umfassend ein Ultraschallbehandlungsmittel bestehend aus einer oder mehreren Ultraschallbehandlungs-Sonotrode(n), die mit einer Frequenz von 15 kHz bis 1000 kHz arbeiten und derart ausgelegt sind, um eine Ultraschallverarbeitung der Polymer-/Füllstoffmischung von weniger als 60 Sekunden zu erlauben;
ein Einzel- oder Doppelschneckenextruder; und
ein Austrittmittel, das zum Austreten der mit Ultraschall behandelten Mischung aus der Ultraschallbehandlungszone ausgelegt ist;
**dadurch gekennzeichnet, dass**:
der Einzel- oder Doppelschneckenextruder einen oder mehrere Stromlinienkanäle umfasst, die derart ausgelegt sind, um eine vorgemischte Mischung durch einen Spalt zwischen der Schneckenoberfläche und einer oder mehreren Ultraschallbehandlungs-Sonotrode(n) zur Ultraschallbehandlungszone abzugeben; und
das Austrittmittel für den Austritt der mit Ultraschall behandelten Mischung aus der Ultraschallbehandlungszone in einen oder mehrere Stromlinien-Austrittskanäle ausgelegt ist.

## Revendications

1. Procédé de production de composites polymères présentant des propriétés mécaniques, thermiques et/ou électriques améliorées, comprenant :
la fourniture d'un ou plusieurs polymère(s) ;
la fourniture d'une charge, dans lequel la charge correspond à un ou plusieurs nanofibre(s) ou à un ou plusieurs nanotube(s) ;
la fourniture d'un mélangeur continu choisi parmi un extrudeur monovis ou double-vis pour mélanger lesdits un ou plusieurs polymère(s) et la charge, et un moyen de traitement aux ultrasons présentant une zone de traitement aux ultrasons ayant une fréquence comprise dans la plage de 154 kHz à 1 000 kHz, dans lequel le mélangeur continu présente deux zones de traitement ou plus comprenant le traitement aux ultrasons se produisant dans la deuxième zone de traitement ou dans lequel le mélangeur continu présente au moins trois zones de traitement, la zone de traitement aux ultrasons se produisant dans la troisième zone de traitement, et dans lequel moyen de traitement aux ultrasons consiste en un ou plusieurs cornets de traitement aux ultrasons ;
le mélange, dans le mélangeur continu, desdits un ou plusieurs polymères et de la charge pour créer un mélange polymère/charge
**caractérisé en ce que** le procédé comprend en outre :
l'introduction du mélange polymère/charge à travers une ou plusieurs voies d'écoulement profilées jusqu'à la zone de traitement aux ultrasons via un interstice entre la surface à vis et les cornets de traitement aux ultrasons, dans lequel le mélange de charge et de polymère est soumis à un traitement aux ultrasons pendant moins de 60 secondes pour ainsi disperser davantage la charge et produire un composite polymère présentant de propriétés thermiques, électriques et/ou mécaniques améliorées ; et
la récupération du mélange de charge et de polymère traité aux ultrasons via une ou plusieurs voies d'écoulement profilées d'évacuation sous forme de produit de mélange polymère.

2. Procédé selon la revendication 1, dans lequel un ou plusieurs polymères correspondent à de la résine thermoplastique et/ou à de la résine thermodurcie, ou dans lequel lesdits un ou plusieurs polymères correspondent à du caoutchouc thermoplastique et/ou à un fluide réactif thermodurci, ou dans lequel lesdits un ou plusieurs polymère(s) correspondent à du polyétherimide.

3. Procédé selon la revendication 1, dans lequel lesdits un ou plusieurs nanofibres correspondent à un nanofibre polymère, un nanofibre de céramique et/ou à un nanofibre de carbone, ou dans lequel lesdits un ou plusieurs nanotube(s) corresponde(nt) à un nanotube de carbone.

4. Procédé selon la revendication 1, dans lequel le ou les nanofibres présentent un diamètre compris entre 1 nanomètre et 200 nanomètres, ou dans lequel lesdits un ou plusieurs nanofibre(s) présentent un diamètre compris entre 15 nanomètres et 200 nanomètres.

5. Procédé selon la revendication 1, dans lequel le moyen de traitement aux ultrasons est réalisé à une fréquence comprise entre 15 kHz et 500 kHz, ou dans lequel le moyen de traitement aux ultrasons est réalisé à une température comprise entre 30 °C et 400 °C.

6. Procédé selon la revendication 1, dans lequel le moyen de traitement aux ultrasons est réalisé pendant moins de 30 secondes.

7. Procédé selon la revendication 1, dans lequel la zone de traitement aux ultrasons apparaît après que le composé ait été évacué d'une zone de mélange et a pénétré dans une zone sous pression.

8. Procédé selon la revendication 1, dans lequel la zone de traitement aux ultrasons comprend au moins une zone de mélange dispersif et au moins une zone de mélange distributif.

9. Procédé selon la revendication 1, dans lequel lesdits un ou plusieurs nanofibres correspondent à du nanofibre de carbone selon une concentration comprise entre 0 et 20 % en poids, ou dans lequel les un ou plusieurs nanotubes correspondent à des nanotubes de carbone selon une concentration comprise entre 0 e 20 % en poids.

10. Procédé selon la revendication 1, dans lequel le mélange de polymère et de charge traité aux ultrasons est ensuite refroidi à l'eau.

11. Procédé selon la revendication 1, dans lequel le produit de mélange polymère correspond à une ou plusieurs pastilles, à un ou plusieurs film(s), est introduit dans un moyen de moulage par injection ou est introduit vers un moyen d'extrusion.

12. Appareil de mélange de polymère et de charge comprenant :
une zone de traitement aux ultrasons comprenant un moyen de traitement aux ultrasons consistant en un ou plusieurs cornets de traitement aux ultrasons fonctionnant dans une fréquence allant de 15 kHz à 1 000 kHz et conçu pour permettre le processus de traitement aux ultrasons de mélange de charge et de polymère pendant moins de 60 secondes ;
un extrudeur monovis ou double vis ; et
un moyen d'évacuation conçu pour l'évacuation du mélange traité aux ultrasons depuis la zone de traitement aux ultrasons ;
**caractérisé en ce que** :
l'extruder monovis ou double vis comprend une ou plusieurs voies d'écoulement profilées conçues pour faire circuler un mélange préalablement mélangé à travers un interstice entre la surface à vis et un ou plusieurs cornets de traitement aux ultrasons jusqu'à la zone de traitement aux ultrasons ; et
le moyen d'évacuation est conçu pour l'évacuation du mélange traité aux ultrasons depuis la zone de traitement aux ultrasons dans une ou plusieurs voies d'écoulement profilées d'évacuation.
